# EUROPEAN PATENT SPECIFICATION

(11) **EP 2 817 558 B1**
(45) Date of publication and mention of the grant of the patent: **25.05.2016**
(21) Application number: 13708615.3
(22) Date of filing: 27.02.2013
(51) Int. Cl.: F21V 8/00, G02B 6/00

(54) **Display with electronic devices and backlight structures**
Anzeige mit elektronischen Vorrichtungen und Hintergrundbeleuchtungsstrukturen
Écran avec dispositifs éléctroniques et structures de rétro-éclairage

(30) Priority: 09.03.2012 US 201213417155; 15.03.2012 US 201213421703
(43) Date of publication of application: 31.12.2014
(73) Proprietor: Apple Inc., Cupertino, CA 95014 (US)
(72) Inventor: FRANKLIN, Jeremy, C., Cupertino, CA 95014 (US); WRIGHT, Derek, W., Cupertino, CA 95014 (US); QI, Jun, Cupertino, CA 95014 (US); ZHU, Wenyong, Cupertino, CA 95014 (US)
(74) Representative: Rooney, John-Paul
(86) International application number: PCT/US2013/027903
(87) International publication number: WO 2013/134017

(56) References cited:
- EP-A1- 2 336 812
- WO-A1-02/097324
- CN-Y- 201 243 331
- US-A1- 2001 019 479
- US-A1- 2009 040 786
- US-A1- 2009 315 846
- US-A1- 2010 118 563
- US-A1- 2011 103 041

## Description

This application claims priority to United States patent application No. 13/417,155 filed March 9, 2012, and United States patent application No. 13/421,703 filed March 15, 2012.

### Background

This relates generally to electronic devices and, more particularly, to electronic devices with displays and associated backlight structures.

Electronic devices such as computers and cellular telephones have displays. Some displays such as plasma displays and organic light-emitting diode displays have arrays of display pixels that generate light. In displays of this type, backlighting is not necessary because the display pixels themselves produce light. Other displays contain passive display pixels that can alter the amount of light that is transmitted through the display to display information for a user but do not produce light themselves. As a result, it is often desirable to provide backlight for a display with passive display pixels.

In a typical backlight assembly for a display, a strip of light-emitting diodes is located along an edge of a light guide plate. Light is launched from the strip of light-emitting diodes into the light guide plate, and the light guide plate is used to distribute the light across the display. The strip of light-emitting diodes is often mounted under an inactive portion of a display.

Ensuring that there is sufficient space to accommodate light-emitting diodes at the edge of a light guide plate may require a significant amount of inactive display area at the border of a display. This type of wide inactive border may be aesthetically unappealing and may reduce the amount of active display area that is available to display images for a user.

In a typical backlight assembly for a display, a light guide plate is used to distribute backlight generated by a light source such as a light-emitting diode light source. Optical films such as a diffuser layer and brightness enhancing film may be placed on top of the light guide plate. A reflector may be formed under the light guide plate to improve backlight efficiency.

To provide satisfactory backlighting, it may be desirable to locate one or more strips of light-emitting diodes on the edges of a light guide plate. A light strip of light-emitting diodes may be formed by mounting a row of light-emitting diodes onto a flex circuit. Light strips are typically attached at the edges of the light guide plate so that the light-emitting diodes can direct light into the light guide plate. Examples of backlight assemblies can be found in US 20090315846, CN201243331, US 20110103041, US 2010 0118563, US 20010019479 and WO 02097324.

In an ideal light strip, the light-emitting diodes are aligned with each other so that each light-emitting diode can physically contact the light guide plate. However, there are often placement variations within a row of light-emitting diodes that result in misalignment. If care is not taken, this type of misalignment can result in air gaps between the light-emitting diodes and the light guide plate. The presence of air gaps can have an adverse impact on backlight efficiency. Poor backlight efficiency may in turn decrease power consumption efficiency and can reduce battery life in an electronic device.

It would therefore be desirable to be able to provide electronic devices with improved arrangements for backlighting displays.

### Summary

The invention is defined in claim 1.

A backlight assembly may be provided for producing backlight illumination for a display. The backlight assembly may include a light guide plate. The light guide plate may have an upper surface through which backlight is provided to the underside of the display.

A light source may be configured to provide light to the light guide plate. The light source may include one or more light-emitting diodes. The light-emitting diodes may be mounted on a flexible substrate. Conductive traces may be formed on the flexible substrate and may be used to supply power to the light-emitting diodes.

A light guide structure is coupled between the light source and the light guide plate. The light guide structure is configured to receive the light from the light source and to guide the light to the light guide plate via total internal reflection.

The light source may overlap an edge portion of the light guide plate. The elongated light guide structure is coupled to an edge of a light guide plate. The light guide structure may have a length that runs parallel to the edge of the light guide plate. The light source is coupled to an end of the light guide structure. Light is emitted from the light source into the end of the light guide structure and may be guided within the light guide structure via total internal reflection.

A transparent adhesive may be interposed between the edge of the light guide plate and the light guide structure.

A display may be mounted in an electronic device housing. One or more electronic components may be mounted in the housing. A backlight assembly may be used to provide backlight to the display. The backlight assembly includes a light guide plate and a plurality of light sources. The light guide structure has first and second opposing edges. The first edge is coupled to an edge of the light guide plate and the second edge is coupled to the plurality of light sources. The light guide structure is used to guide the light from the light sources to the light guide plate via total internal reflection.

The light guide structure has a bend. The bend in the light guide structure allows an electronic component such as a button to overlap the light sources.

A backlight assembly may be provided for producing backlight illumination for a display. The backlight assembly may have light sources such as light-emitting diodes. The light-emitting diodes may be edge-emitting diodes that emit light through edges that are perpendicular to a base surface or may emit light through a surface that opposes the base surface.

The backlight assembly includes a light guide plate. The light guide plate has an upper surface through which backlight is provided to the underside of the display. The light guide plate has also edge portions into which light may be launched from the light-emitting diodes.

The light-emitting diodes may be mounted on a flexible substrate such as a flexible printed circuit formed form a flexible sheet of polymer.

Further features of the invention, its nature and various advantages will be more apparent from the accompanying drawings and the following detailed description of the preferred embodiments.

### Brief Description of the Drawings

FIG. 1 is a diagram of an illustrative electronic device such as a portable computer having a backlit display in accordance with an embodiment of the present invention.
FIG. 2 is a diagram of an illustrative electronic device such as a cellular telephone or other handheld device having a backlit display in accordance with an embodiment of the present invention.
FIG. 3 is a diagram of an illustrative electronic device such as a tablet computer having a backlit display in accordance with an embodiment of the present invention.
FIG. 4 is a diagram of an illustrative electronic device such as a computer monitor with a built-in computer having a backlit display in accordance with an embodiment of the present invention.
FIG. 5 is a cross-sectional side view of an illustrative backlit display in accordance with an embodiment of the present invention.
FIG. 6 is an exploded perspective view of a portion of an illustrative electronic device having display structures, backlight structures, and an associated printed circuit in accordance with an embodiment of the present invention.
FIG. 7 is a cross-sectional side view of an illustrative backlight arrangement in which a light source is stacked above a light guide plate so that the light source overlaps an edge portion of the light guide plate.
FIG. 8 is a cross-sectional side view of an illustrative backlight arrangement in which a light source is stacked below a light guide plate so that the light source overlaps an edge portion of the light guide plate.
FIG. 9 is a cross-sectional side view of an illustrative backlight arrangement in which a light guide structure with an L-shaped bend is used to couple a light source to a light guide plate.
FIG. 10 is a cross-sectional side view of an illustrative backlight arrangement in which a light guide structure with an L-shaped bend is used to couple a light source to a light guide plate.
FIG. 11 is a cross-sectional side view of an illustrative display that has been mounted in a housing of an electronic device in a configuration in which an electronic component overlaps a light source in accordance with an embodiment of the present invention.
FIG. 12 is a top view of an illustrative backlight arrangement in which a light guide structure is used to guide light from a light source to a light guide plate.
FIG. 13 is a top view of an illustrative backlight arrangement in which a light guide structure has an L-shaped bend to wrap around a corner of a light guide plate and is used to guide light from a light source to the light guide plate.
FIG. 14 is a top view of an illustrative backlight arrangement of the type shown in FIGS. 11 and 12 in which a light guide structure is formed from a plurality of optical waveguides (light guides).
FIG. 15 is a top view of an illustrative backlight arrangement of the type shown in FIGS. 11 and 12 in which a light guide structure is provided with light leakage promotion structures.
FIG. 16 is a top view of an illustrative backlight arrangement in which a light guide structure is provided with light leakage promotion structures that vary in density.
FIG. 17 is a top view of an illustrative backlight arrangement in which a light guide structure is provided with light leakage promotion structures that a vary in size.
FIG. 18 is a top view of an illustrative backlight arrangement in which a light guide structure is provided with light leakage promotion structures having one or more properties that vary gradually along the length of the light guide structure.
FIG. 19 is a top view of an illustrative backlight arrangement in which a light guide structure is provided with light leakage promotion structures formed from embedded scattering structures.
FIG. 20 is a top view of an illustrative backlight arrangement in which a light guide structure is provided with light leakage promotion structures formed from protrusions.
FIG. 21 is a diagram of an illustrative electronic device such as a portable computer having a backlit display in accordance with an embodiment of the present invention.
FIG. 22 is a diagram of an illustrative electronic device such as a cellular telephone or other handheld device having a backlit display in accordance with an embodiment of the present invention.
FIG. 23 is a diagram of an illustrative electronic device such as a tablet computer having a backlit display in accordance with an embodiment of the present invention.
FIG. 24 is a diagram of an illustrative electronic device such as a computer monitor with a built-in computer having a backlit display in accordance with an embodiment of the present invention.
FIG. 25 is a cross-sectional side view of an illustrative backlit display.
FIG. 26 is a cross-sectional side view of a conventional backlight arrangement having air gaps between the light-emitting diodes and the light guide plate.
FIG. 27 is a top view of a conventional backlight arrangement having air gaps between the light-emitting diodes and the light guide plate.
FIG. 28A is a cross-sectional side view of a backlight arrangement in which light-emitting diodes are mounted on a flexible substrate that is curled into a spring element that biases the top of each light-emitting diode against a light guide plate.
FIG. 28B is a top view of a flexible substrate that may be used to form the spring element of FIG. 8A in which the flexible substrate is provided with gaps that separate and mechanically decouple adjacent light-emitting diodes.
FIG. 28C is a top view of a flexible substrate that may be used to form the spring element of FIG. 8A in which the flexible substrate is free of gaps.
FIG. 29A is a cross-sectional side view of a backlight arrangement in which light-emitting diodes are mounted on a flexible substrate that is curled into a spring element that biases the side of each light-emittin diode against a light guide plate.
FIG. 29B is a top view of a flexible substrate that may be used to form the spring element of FIG. 9A in which the flexible substrate is provided with gaps that separate and mechanically decouple adjacent light-emitting diodes.
FIG. 29C is a top view of a flexible substrate that may be used to form the spring element of FIG. 9A in which the flexible substrate is provided with locally widened gaps.
FIG. 30A is a cross-sectional side view of a backlight arrangement in which a high shear adhesive is used to attach the flexible substrate to a support structure.
FIG. 30B is a top view of a flexible substrate that may be used in the arrangement of FIG. 10A in which the flexible substrate has a serpentine shape that mechanically decouples adjacent light-emitting diodes.
FIG. 31A is a cross-sectional side view of a backlight arrangement in which a biasing structure is used to press light-emitting diodes against a light guide plate.
FIG. 31B is a top view of a flexible substrate that may be used in the arrangement of FIG. 11A in which the flexible substrate is provided with rail holes to attach the flexible substrate to a support structure.
FIG. 31C is a top view of a flexible substrate that may be used in the arrangement of FIG. 11A in which the flexible substrate has a serpentine shape that mechanically decouples adjacent light-emitting diodes.
FIG. 32A is a top view of a backlight arrangement in which an index-matching material is used to fill gaps between light-emitting diodes and a light guide plate.
FIG. 32B is a cross-sectional side view of the backlight arrangement of FIG. 12A in which an index-matching material is used to fill gaps between light-emitting diodes and a light guide plate.

### Detailed Description

A display may be provided with backlight structures. The backlight structures may produce backlight for the display that helps a user of a device view images on the display in a variety of ambient lighting conditions. Displays with backlights may be provided in any suitable type of electronic equipment.

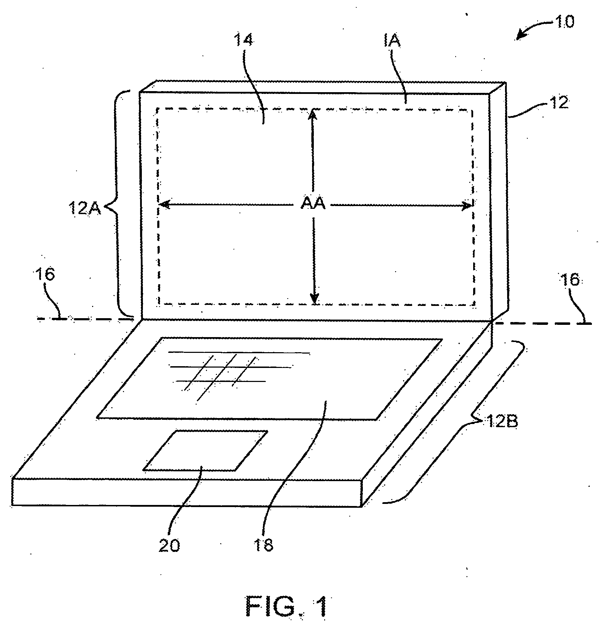

In some configurations, an electronic device may be provided with a backlight arrangement in which a light guide structure is used to route light from a light source to a light guide plate. The light guide plate may distribute the light across the display to display images for a user. FIGS. 1-20 show examples of backlight configurations in which a light guide structure may be used to route light from a light source to a light guide plate.

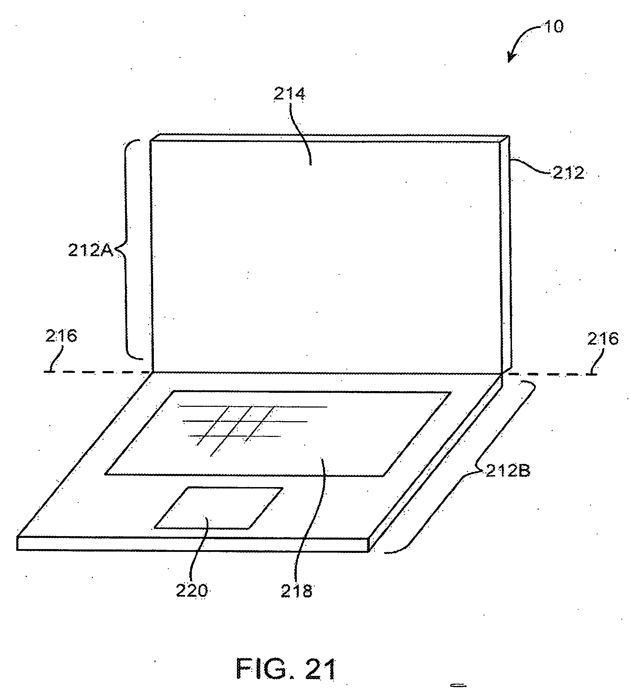

In some configurations, an electronic device may be provided with a backlight arrangement in which a plurality of light sources are located along the edge of a light guide plate. A biasing member may be used to press the light sources against the edge of the light guide plate or an index-matching material may be interposed between the light sources and the edge of the light guide plate. FIGS. 21-32B show examples of backlight configurations in which light sources are located along the edge of a light guide plate.

An illustrative electronic device of the type that may be provided with a backlit display in which a light guide structure is used to route light from a light source to a light guide plate is shown in FIG. 1. Electronic device 10 may be a computer such as a computer that is integrated into a display such as a computer monitor, a laptop computer, a tablet computer, a somewhat smaller portable device such as a wrist-watch device, pendant device, or other wearable or miniature device, a cellular telephone, a media player, a tablet computer, a gaming device, a navigation device, a computer monitor, a television, or other electronic equipment.

As shown in FIG. 1, device 10 may include a backlit display such as display 14. Display 14 may be a touch screen that incorporates capacitive touch electrodes or other touch sensor components or may be a display that is not touch-sensitive. Display 14 may include image pixels formed from liquid crystal display (LCD) components or other suitable display pixel structures. Arrangements in which display 14 is formed using liquid crystal display pixels are sometimes described herein as an example. This is, however, merely illustrative. Any suitable type of display technology may be used to form display 14 if desired (e.g., electrowetting display technology, electrophoretic display technology, etc.).

Device 10 may have a housing such as housing 12. Housing 12, which may sometimes be referred to as a case, may be formed of plastic, glass, ceramics, fiber composites, metal (e.g., stainless steel, aluminum, etc.), other suitable materials, or a combination of any two or more of these materials.

Housing 12 may be formed using a unibody configuration in which some or all of housing 12 is machined or molded as a single structure or may be formed using multiple structures (e.g., an internal frame structure, one or more structures that form exterior housing surfaces, etc.).

As shown in FIG. 1, housing 12 may have multiple parts. For example, housing 12 may have upper portion 12A and lower portion 12B. Upper portion 12A may be coupled to lower portion 12B using a hinge that allows portion 12A to rotate about rotational axis 16 relative to portion 12B. A keyboard such as keyboard 18 and a touch pad such as touch pad 20 may be mounted in housing portion 12B.

Display 14 may have an active area such as active area AA and an inactive area such as area IA. Active area AA may be, for example, a rectangular region in the center of display 14 in which display pixels are actively used to display images for a user of device 10. Inactive area IA may be devoid of active display pixels. In the example of FIG. 1, inactive area IA has the shape of a rectangular ring that surrounds active area AA of display 14.

Circuitry and components may sometimes be formed under the inactive area IA of display 14. To hide the circuitry and other components from view of a user of device 10, inactive area IA may be provided with an opaque mask. The opaque mask can be formed from an opaque material such as a black pigmented polymer material or may be formed from opaque masking materials of other colors. Configurations in which the opaque masking material in display 14 has a black appearance are sometimes described herein as an example. This is, however, merely illustrative. Opaque masking material in device 10 may have any suitable color.

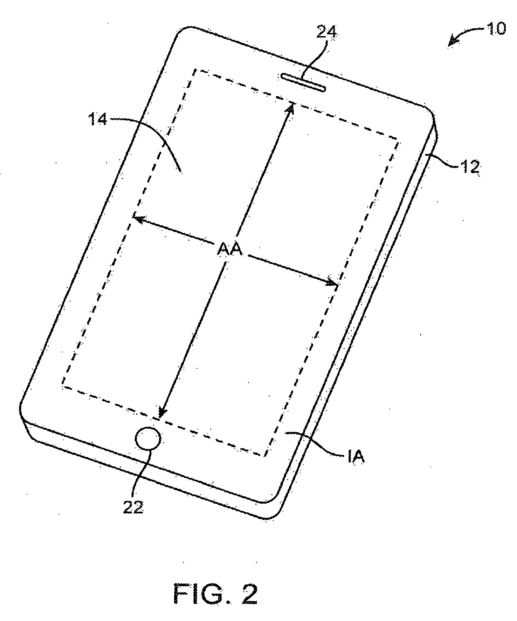

In the example of FIG. 2, device 10 has been implemented using a housing that is sufficiently small to fit within a user's hand (i.e., device 10 of FIG. 2 may be a handheld electronic device such as a cellular telephone). As show in FIG. 2, device 10 may include a backlit display such as display 14 mounted on the front of housing 12. Display 14 may be substantially filled with active display pixels or may have an inactive portion such as inactive portion IA that surrounds an active portion such as active portion AA. Display 14 may have openings (e.g., openings in inactive region IA or in active region AA of display 14) such as an opening to accommodate button 22 and an opening to accommodate speaker port 24.

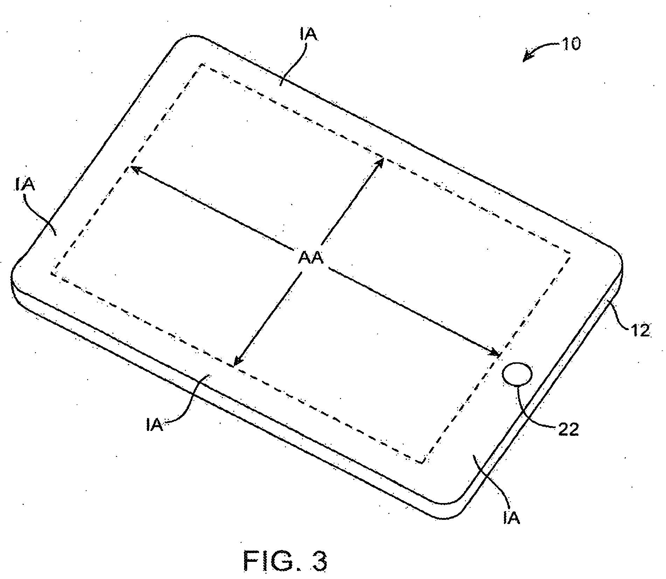

FIG. 3 is a perspective view of electronic device 10 in a configuration in which electronic device 10 has been implemented in the form of a tablet computer. As shown in FIG. 3, backlit display 14 may be mounted on the upper (front) surface of housing 12. An opening may be formed in display 14 to accommodate button 22 (e.g., in inactive region IA surrounding active region AA).

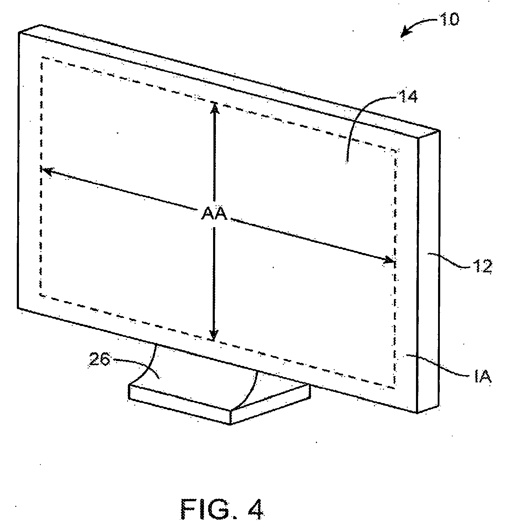

FIG. 4 is a perspective view of electronic device 10 in a configuration in which electronic device 10 has been implemented in the form of a computer integrated. into a computer monitor. As shown in FIG. 4, backlit display 14 may be mounted on the front surface of housing 12. Stand 26 may be used to support housing 12. Display 14 may include an inactive region such as inactive region IA that surrounds active region AA.

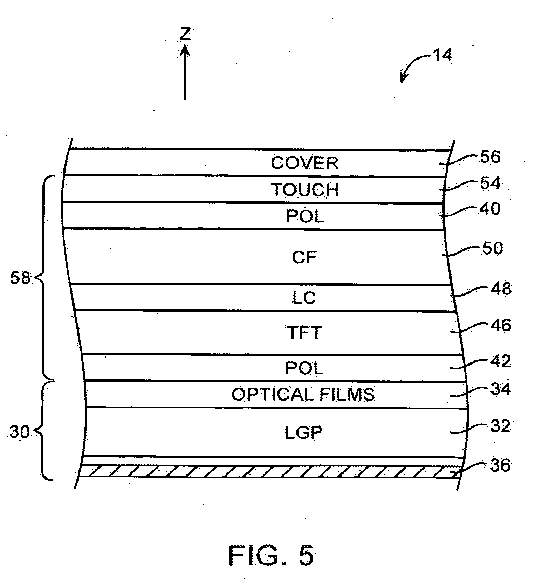

A cross-sectional side view of display 14 is shown in FIG. 5. As shown in FIG. 5, display 14 may include backlight structures 30 and display layers 58. Backlight structures 30 may include a light guide plate such as light guide plate 32, optical films such as optical films 34, and a reflector such as reflector 36. During operation, a light source such as a light-emitting diode light source may emit light into light guide plate 32. Light guide plate 32 may be formed from a sheet of clear acrylic or other transparent polymer. Light may travel within light guide plate 32 by means of total internal reflection. Light that escapes through the upper surface of light guide plate 32 may pass through overlying display layers 58 in direction z and may serve as backlight for display 14. Light that escapes through the lower surface of light guide plate 32 may be reflected by reflector 36 and redirected upwards in direction z. Reflector 36 may be formed from a reflective material such as white plastic (as an example). Optical films 34 may include brightness enhancing film layers, diffusing film layers, and compensating film layers (as examples).

Display 14 may have an upper polarizer layer such as polarizer layer 40 and a lower polarizer layer such as polarizer layer 42. Polarizer layer 42 may polarize backlight 44. Thin-film transistor (TFT) layer 46 may include a layer of thin-film transistor circuitry and an array of associated pixel electrodes. Pixel structures such as thin-film transistor structures and associated pixel electrodes in the array of pixel electrodes on thin-film transistor layer 46 may produce electric fields corresponding to image data to be displaced. The electric field produced by each electrode on thin-film transistor layer 46 adjusts the orientation of liquid crystals in an associated portion of liquid crystal layer 48 by a corresponding amount. As light travels through display 14, the adjustment of the orientation of the liquid crystals adjusts the polarization of the light that passes through layer 48. When this light reaches upper polarizer 40, the polarization state of each pixel of light is attenuated by an amount that is proportional to its polarization, thereby creating visible images for a user.

Color filter layer 50 may contain an array of colored pixels (e.g., an array of red, blue, and green color filter elements) for providing display 14 with the ability to form color images. If desired, a sealant may be used to seal color filter layer 50 to thin-film transistor layer 46 and to retain liquid crystal material 48 within display 14.

Display 14 may include a touch-sensitive layer such as touch-sensitive layer 54 for receiving touch input from a user of device 10. Touch-sensitive layer 54 may include a pattern of indium tin oxide (ITO) electrodes or other suitable transparent electrodes that have been deposited to form a capacitive touch sensor array. Touch-sensitive layer 54 may, in general, be configured to detect the location of one or more touches or near touches on touch-sensitive layer 54 based on capacitive, resistive, optical, acoustic, inductive, or mechanical measurements, or any phenomena that can be measured with respect to the occurrence of the one or more touches or near touches in proximity to touch-sensitive layer 54. If desired, touch-sensitive layer 54 may be incorporated into thin-film transistor layer 46 (e.g., display pixel electrodes and capacitive touch electrodes may be formed on a common substrate). The example of FIG. 5 in which touch-sensitive layer 54 is separate from thin-film transistor layer 46 is merely illustrative.

If desired, additional layers may be included in display 14. An optional layer of transparent glass or plastic may be used to provide a protective cover for display 14, as illustrated by cover layer 56 of FIG. 5.

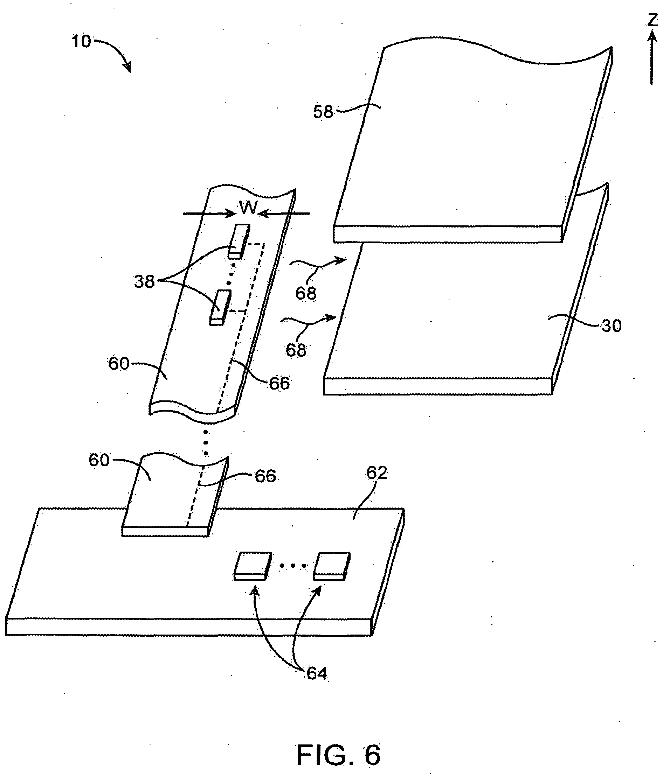

FIG. 6 is an exploded perspective view of an assembly that includes display layers 58, backlight structures 30, and light sources for providing backlight to backlight structures 30. As shown in FIG. 6, a plurality of light sources such as light sources 38 may be mounted on a substrate such as substrate 60. Light sources 38 may be formed from a plurality of light-emitting diodes that are arranged in a row along the length of substrate 60. Substrate 60 may be a flexible printed circuit ("flex circuit") formed from one or more flexible sheets of polymer such as a polyimide. Conductive traces may be formed on and/or within substrate 60 (e.g., using copper or other metals). If desired, each light-emitting diode 38 on substrate 60 may be soldered to an associated trace 66. During operation, power may be provided to light-emitting diodes 38 via traces 66.

Substrate 60 may be coupled to a printed circuit such as printed circuit 62. Printed circuit 62 may be a rigid printed circuit board formed from material such as fiberglass-filled epoxy (e.g., FR4), may be a flexible printed circuit ("flex circuit") formed from one or more flexible sheets of polymer such as polyimide, or may be formed from materials such as ceramic, plastic, glass, etc. If desired, printed circuit 62 may be formed from a combination of rigid and flexible layers (sometimes referred to as a "rigid-flex" printed circuit). Substrate 60 may be attached to printed circuit 62 using a connector, using solder, or using any other suitable type of attachment method.

Integrated circuits, discrete components such as resistors, capacitors, and inductors, and other electronic components such as components 64 may be mounted to printed circuit 62. If desired, components such as components 64 may be used to supply control signals to light sources 38 via traces 66 (as an example).

During operation, light sources 38 may be used to emit light 68 into backlight structures 30 (e.g., into light guide plate 32 of FIG. 5). Backlight structures 30 may be used to distribute light 68 uniformly across display layers 58 in direction z.

In a conventional backlight assembly, light-emitting diodes are positioned along the edge of a light guide plate and are typically located under an inactive portion of a display. Accommodating light-emitting diodes at the edge of a light guide plate may require a significant amount of inactive display area. For example, a width such as width W may be required to accommodate light-emitting diodes at the edge of a light guide plate. Additionally, a "mixing distance" is required for the light from discrete light sources to become uniform. Providing sufficient space for light mixing at the edge of a light guide plate requires additional inactive display area at the edge of a display. Positioning light-emitting diodes at the edge of a light guide plate may therefore result in an undesirable amount of inactive display area around the border of a display.

To minimize the amount of inactive display area around the border of a display, light sources may be positioned in a space-efficient location and an auxiliary light guide structure may be used to route light from the light sources to the light guide plate. For example, light sources may be located above the light guide plate, may be located below the light guide plate, or may be located in a centralized location that does not necessitate the use of additional inactive display area.

In discussing the structures that may be used in electronic device 10, certain structures are sometimes said to be "above" or "below" other structures. A structure that is above another structure may be closer to the front surface of electronic device 10 than that structure. A structure that is below another structure may be closer to the rear or back surface of electronic device 10 than that structure.

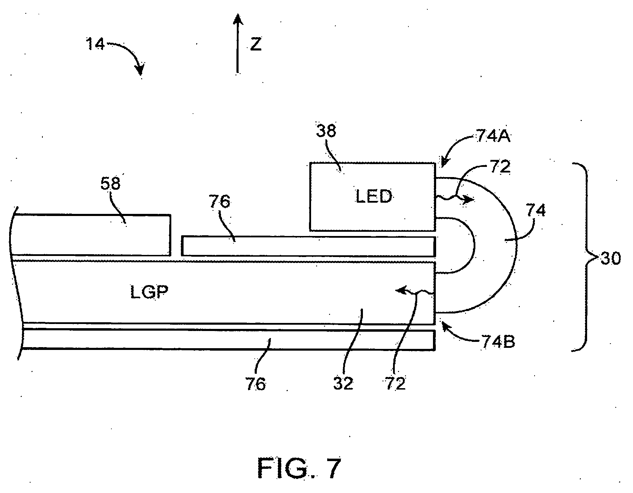

FIG. 7 is a cross-sectional side view of a backlight assembly in which a light source such as light source 38 is located above a light guide plate such as light guide plate 32 (e.g., in which light source 38 is located on the same side of light guide plate 32 as display layers 58). As shown in FIG. 7, light source 38 overlaps an edge portion of light guide plate 32 and emits light 72 into an auxiliary light guide structure such as light guide structure 74. Light guide structure 74 may be used to route light 72 from light source 38 to light guide plate 32.

Light guide structure 74 may be formed as an integral part of light guide plate 32 or may be formed as a separate structure that is coupled to light guide plate 32. Light guide structure 74 may be formed from a material such as plastic that has been molded, formed, or machined into a curved shape. In the example of FIG. 7, light guide structure 74 has a U-shaped bend (e.g., makes a 180° turn) and is configured to redirect light 72 (initially directed away from light guide plate 32) towards light guide plate 32. Light 72 may be reflected at the walls of light guide structure 74 and may be guided towards light guide plate 32 by means of total internal reflection. Light 72 that is launched into light guide plate 32 from light guide structure 74 may then be distributed across display layers 58 in direction z to serve as backlight for display 14.

A plurality of light sources 38 may be used to provide backlight for display 14. For example, a plurality of light-emitting diodes 38 may be coupled to end 74A of light guide structure 74 and may be used to provide backlight for display 14. To ensure that backlight is evenly distributed across display 14, a mixing distance may be provided to allow light from discrete light sources (e.g., light from individual light-emitting diodes) to become uniform. Light guide structure 74 may provide sufficient mixing distance for light 72 from individual light sources 38 to mix and become uniform as it propagates from end 74A to opposing end 74B of light guide structure 74.

Light guide plate 32 may be mounted within an optional support structure such as support structure 76. Support structure 76 (sometimes referred to as a chassis or mechanical chassis) may be formed from materials such as plastic, ceramic, fiber composites, metal, or other suitable materials. If desired, display 14 may be formed by mounting backlight structures 30 directly within housing 12 or by mounting backlight structures 30 in support structures of other shapes. In the illustrative configuration of FIG. 7, support structure 76 is used in forming a backlight assembly for display 14 that may be mounted within housing 12 under a display cover layer such as display cover layer 56 of FIG. 5. Other mounting configurations may be used, if desired.

Support structure 76 may be formed from a thermally conductive material and may be used as a heat sink for light-emitting diodes 38. If desired, there may be additional heat sinks in the vicinity of backlight structures 30 that may be used to transfer heat away from display 14.

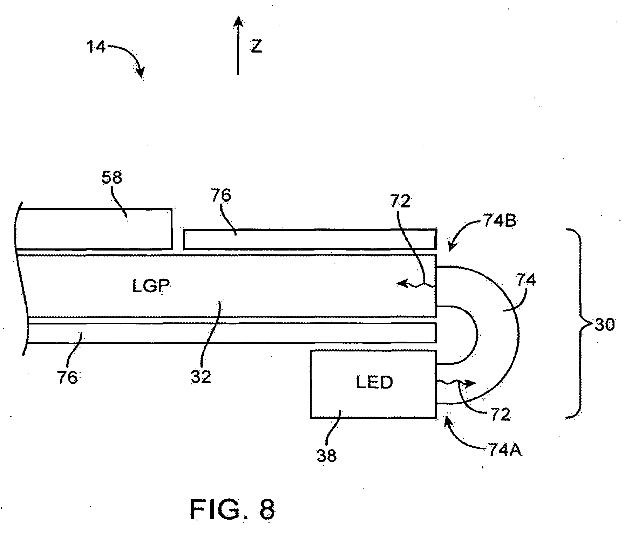

FIG. 8 is a cross-sectional side view of another possible backlight assembly that may be used to provide backlight for display 14. In the example of FIG. 8, light source 38 is be positioned below light guide plate 32 (e.g., on the opposite side of light guide plate 32 as display layers 58) and overlaps an edge portion of light guide plate 32. Light source 38 may emit light 72 into light guide structure 74. Light guide structure 74 may be used to route light 72 from light source 38 to light guide plate 32.

In the example of FIG. 8, light guide structure 74 has a U-shaped bend (e.g., makes a 180° turn) to redirect light 72 (initially directed away from light guide plate 32) towards light guide plate 32. Light 72 may be reflected at the walls of light guide structure 74 and may be guided towards light guide plate 32 by means of total internal reflection. Light 72 that is launched into light guide plate 32 from light guide structure 74 may then be distributed across display layers 58 in direction z to serve as backlight for display 14.

A plurality of light sources 38 may be used to provide backlight for display 14. Light guide structure 74 may provide sufficient mixing distance for light 72 from individual light sources 38 to mix and become uniform as it propagates from end 74A to opposing end 74B of light guide structure 74.

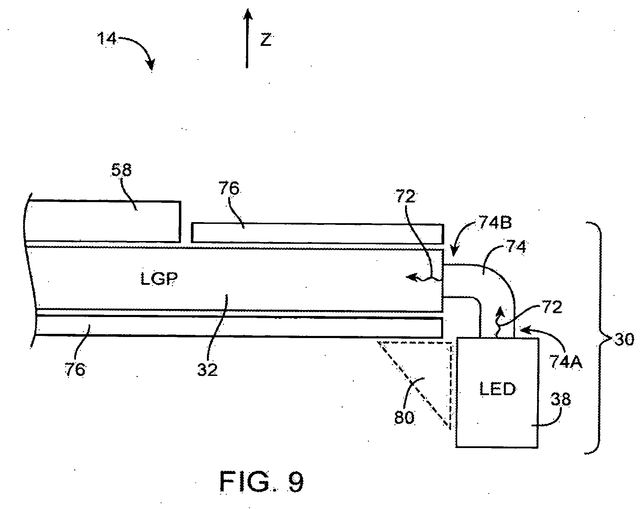

FIG. 9 is a cross-sectional side view of another possible backlight assembly that may be used to provide backlight for display 14. As shown in FIG. 9, light source 38 may be positioned below light guide plate 32 (e.g., on the opposite side of light guide plate 32 as display layers 58) and may be oriented perpendicular to light guide plate 32. Light source 38 may emit light 72 into light guide structure 74. In the example of FIG. 9, light guide structure 74 has an L-shaped bend (e.g., makes a 90° turn) to redirect light 72 (initially directed perpendicular to light guide plate 32) towards light guide plate 32. Light 72 may be reflected at the walls of light guide structure 74 and may be guided towards light guide plate 32 by means of total internal reflection. Light 72 that is launched into light guide plate 32 from light guide structure 74 may then be distributed across display layer 58 in direction z to serve as backlight for display 14.

A plurality of light sources 38 may be used to provide backlight for display 14. Light guide structure 74 may provide sufficient mixing distance for light 72 from individual light sources 38 to mix and become uniform as it propagates from end 74A to opposing end 74B of light guide structure 74.

If desired, an optional heat sink structure such as heat sink structure 80 may be formed adjacent to light sources 38 and may be used to transfer heat away from light sources 38. Heat sink structure 80 may be formed from a thermally conductive material such as metal. If desired, heat sink structure 80 may be formed as an integral part of support structure 76, may be formed as an integral part of housing 12, or may be formed as a separate structure that transfers heat away from display 14.

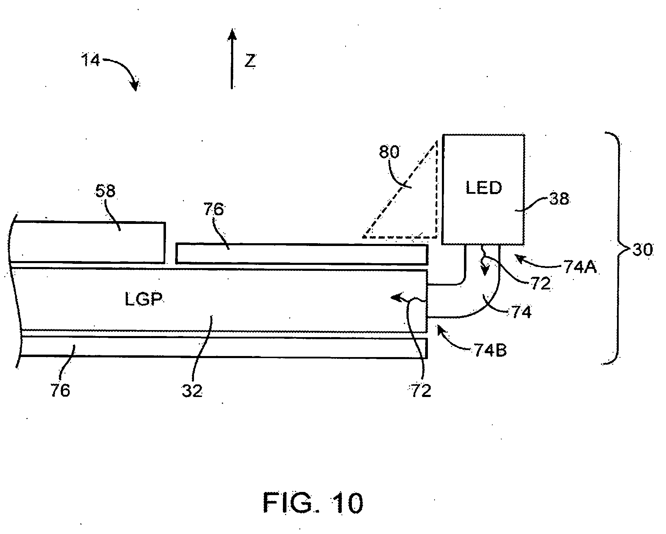

FIG. 10 is a cross-sectional side view of another possible backlight assembly that may be used to provide backlight for display 14. As shown in FIG. 10, light source 38 may be positioned above light guide plate 32 (e.g., on the same side of light guide plate 32 as display layers 58) and may be oriented perpendicular to light guide plate 32. Light source 38 may emit light 72 into light guide structure 74. In the example of FIG. 10, light guide structure 74 has an L-shaped bend (e.g., makes a 90° turn) to redirect light 72 (initially directed perpendicular to light guide plate 32) towards light guide plate 32. Light 72 may be reflected at the walls of light guide structure 74 and may be guided towards light guide plate 32 by means of total internal reflection. Light 72 that is launched into light guide plate 32 from light guide structure 74 may then be distributed across display layer 58 in direction z to serve as backlight for display 14.

A plurality of light sources 38 may be used to provide backlight for display 14. Light guide structure 74 may provide sufficient mixing distance for light 72 from individual light sources 38 to mix and become uniform as it propagates from end 74A to opposing end 74B of light guide structure 74.

If desired, an optional heat sink structure such as heat sink structure 80 may be formed adjacent to light sources 38 and may be used to transfer heat away from light sources 38. Heat sink structure 80 may be formed from a thermally conductive material such as metal. If desired, heat sink structure 80 may be formed as an integral part of support structure 76, may be formed as an integral part of housing 12, or may be formed as a separate structure that transfers heat away from display 14.

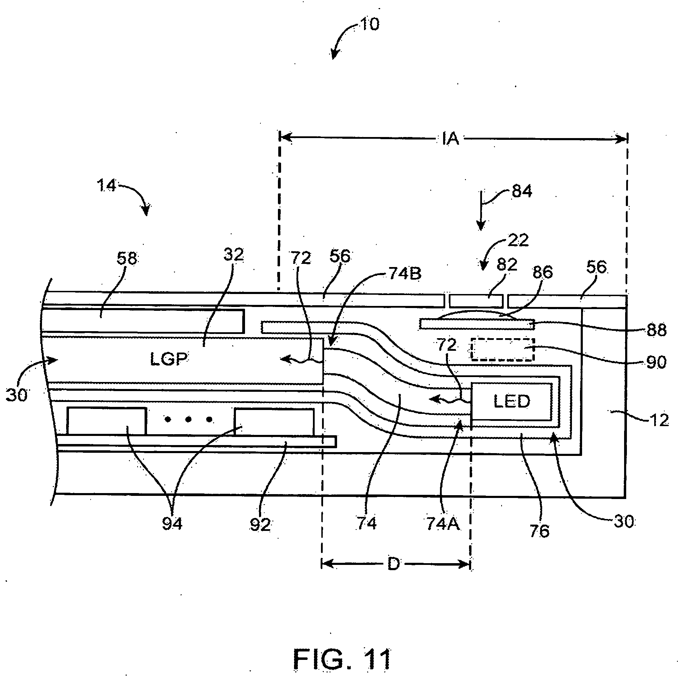

FIG. 11 is a cross-sectional side view of another possible backlight assembly according to the invention that may be used to provide backlight for display 14. As shown in FIG. 11, light guide structures 30 and display layers 58 may be mounted within housing 12 and may be covered by a cover layer such as cover layer 56.

If desired, one or more printed circuits such as printed circuit 92 may be located below display 14. Printed circuit 92 may be a rigid printed circuit board formed from material such as fiberglass-filled epoxy (e.g., FR4), may be a flexible printed circuit ("flex circuit") formed from one or more flexible sheets of polymer such as polyimide, or may be formed from materials such as ceramic, plastic, glass, etc. If desired, printed circuit 92 may be formed from a combination of rigid and flexible layers (sometimes referred to as a "rigid-flex" printed circuit). Integrated circuits, discrete components such as resistors, capacitors, and inductors, and other electronic components such as components 94 may be mounted to printed circuit 92. If desired, components 94 may be used to supply control signals to light sources 38 (e.g., similar to components 64 of FIG. 6).

As shown in FIG. 11, light source 38 may be laterally spaced from the edge of light guide plate 32 by a distance D. Light guide structure 74 may be used to guide light 72 from light source 38 towards light guide plate 32 by means of total internal reflection. Light 72 that is launched into light guide plate 32 from light guide structure 74 may then be distributed across display layers 58 in direction z to serve as backlight for display 14. Light guide structure 74 may provide sufficient mixing distance for light 72 from individual light sources 38 to mix and become uniform as it propagates from end 74A to opposing end 74B of light guide structure 74.

If desired, light source 38 may be offset with light guide plate 32. For example, light guide plate 32 may lie in a plane, and light source 38 may be located outside of that plane (e.g., may be located above or below that plane). This may allow light source 38 to be positioned in a space-efficient location, such as directly above or directly below another component in device 10. For example, light source 38 may be located below a button such as button 22 of device 10.

Button 22 may have a button member such as button member 82. When a user presses the exterior of button member 82 in direction 84, button member 82 may press against a dome switch such as dome switch 86, thereby activating the switch (e.g., shorting internal switch terminals together to close the switch). Dome switches such as dome switch 86 may, if desired, be mounted to printed circuits such as printed circuit 88. Other types of switches may be used if desired, such as switches with spring-based biasing members or other biasing structures that bias button members such as button member 82. The use of a dome switch with a dome-shaped biasing structure is merely illustrative.

Light sources 38 may be located above or below other electronic device components such as internal component 90. This type of configuration in which light sources 38 are located directly above or directly below other device components (such as button 22 and/or component 90) may be space-efficient and may minimize the amount of inactive display area around the border of display 14. For example, button member 22 may be located in an inactive portion (e.g., inactive area IA) of display 14. By positioning light sources 38 directly below button member 22, no additional inactive display area is required to accommodate light sources 38.

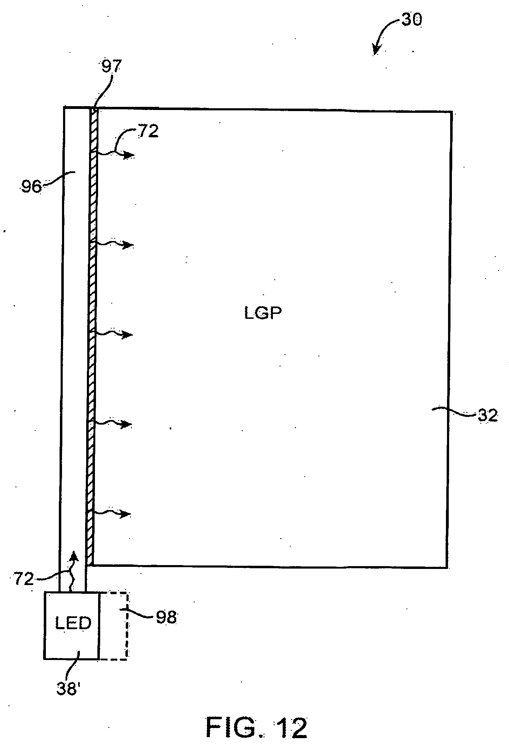

FIG. 12 is a top view of another possible backlight assembly that may be used to provide backlight for display 14. As shown in FIG. 12, a light source such as centralized light source 38' may be used to provide backlight for display 14. Centralized light source 38' may be formed from one, two, three, or more than three light-emitting diodes that are powerful enough to provide sufficient backlight for display 14. An auxiliary light guide structure such as light guide structure 96 may be used to distribute light 72 from centralized light source 38' across the edge of light guide plate 32.

Light guide structure 96 may be formed as an integral part of light guide plate 32 or may be formed as a separate structure that is coupled to the edge of light guide plate 32. Light guide structure 96 may be formed from material such as plastic or glass (as examples). Light guide structure 96 may be formed from a single material (e.g., a single glass or plastic material) or may have an inner portion (e.g., a higher index of refraction portion) that is coated with an outer portion (e.g., a lower index of refraction portion). Light guide structure 96 may be formed from a bundle of fiber-optic cables, may be formed from a single fiber-optic structure, may be formed from an acrylic bar structure, or may be formed from any suitable transparent material that will disperse light from centralized light source 38' into the edge of light guide plate 32. Light 72 may be reflected at the walls of light guide structure 96 and may be guided towards light guide plate 32 by means of total internal reflection. Light 72 that is launched into light guide plate 32 from light guide structure 96 may then be distributed across display layers 58 (FIG. 5) to serve as backlight for display 14.

Any suitable fabrication technique may be used in forming light guide structure 96. For example, light guide structure 96 and light guide plate 32 may form parts of a single integral structure (e.g., a single molded or machined piece of polymer or other suitable material). In this type of configuration, some or all of light guide structure 96 may be formed as an integral part of light guide plate 32. A groove or other recess may be used to separate light guide structure 96 and light guide plate 32. The recess may help confine light to light guide structure 96. Light leakage promotion features may be formed along the edge of light guide structure 96 that is formed from the recess and may be used to release the confined light into light guide plate 32.

.With another suitable arrangement, light guide structure 96 and light guide plate 32 may be formed using double-shot molding. With this type of fabrication technique, a first shot of material is injected into a mold to form a first structure (e.g., to form light guide plate 32). A second shot of material is then injected into the mold form a second structure (e.g., to form an integrally molded light guide structure 96 along the edge of light guide plate 32). Light guide structure 96 and light guide plate 32 may be formed from the same type of material or may be formed from different types of materials. If desired, the materials that are used to form the first and second shots may be polymers with different respective indices of refraction.

If desired, light guide structure 96 may be pressed up against light guide plate 32 or may be bonded to light guide plate 32 using adhesive. For example, a transparent adhesive such as transparent adhesive 97 (e.g., epoxy) may be interposed between light guide structure 96 and light guide plate 32 and may be used to attach light guide structure 96 to the edge of light guide plate 32.

If desired, an optional heat sink structure such as heat sink structure 98 may be formed adjacent to centralized light source 38' and may be used to transfer heat away from centralized light source 38'. Heat sink structure 98 may be formed from a thermally conductive material such as metal. If desired, heat sink structure 98 may be formed as an integral part of surrounding housing structures or other structures or may be formed as a separate structure that transfers heat away from display 14.

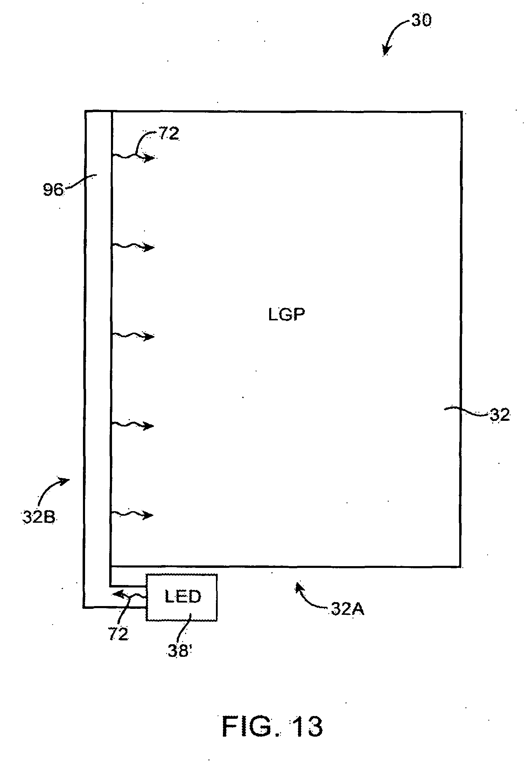

FIG. 13 is a top view of another possible backlight assembly that may be used to provide backlight for display 14. As shown in FIG. 13, a centralized light source such as centralized light source 38' may be used to provide backlight for display 14. An auxiliary light guide structure such as light guide structure 96 may be used to distribute light 72 from centralized light source 38' across the edge of light guide plate 32.

As shown in FIG. 13, centralized light source 38' may be adjacent to a first edge such as edge 32A of light guide plate 32, and light guide structure 96 may be adjacent to a second edge such as edge 32B of light guide plate 32. Light guide structure 96 may have an L-shaped bend to wrap around a corner of light guide plate 32 (e.g., may form a 90° bend around a corner of light guide plate 32) to redirect light 72 (initially directed away from light guide plate 32) towards light guide plate 32. Light 72 may be reflected at the walls of light guide structure 96 and may be guided towards light guide plate 32 by means of total internal reflection. Light 72 hat is launched into light guide plate 32 from light guide structure 96 may then be distributed across display layers 58 (FIG. 5) to serve as backlight for display 14.

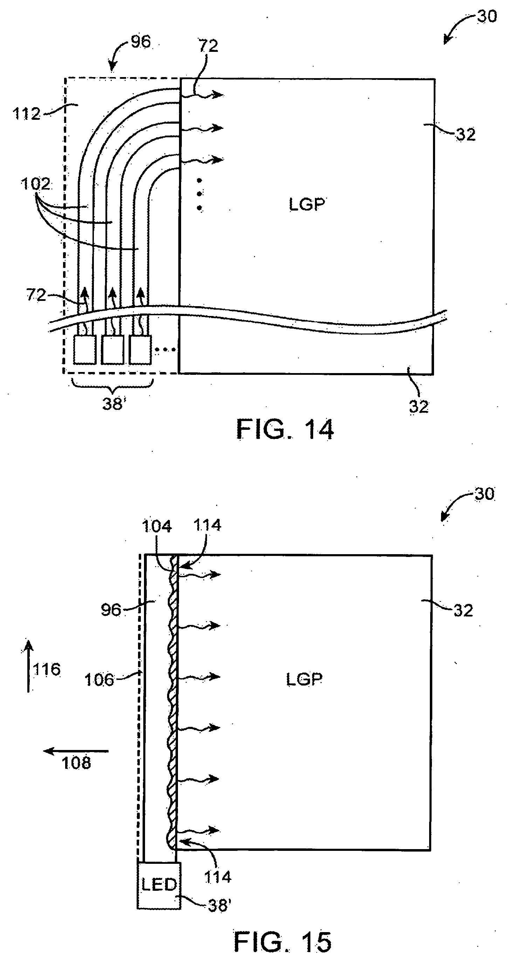

FIG. 14 is a top view of illustrative backlight structures 30 showing how light guide structure 96 may be formed from a plurality of optical waveguides (light guides) such as optical waveguides 102. As shown in FIG. 14, light 72 may propagate through optical waveguides 102 and may be launched into the edge of light guide plate 32. Each optical waveguide 102 may be coupled to a respective portion of light guide plate 32 so that light 72 is distributed evenly along the edge of light guide plate 32.

Optical waveguides 102 may be formed from polymers such as epoxy, may be formed from optical fibers, or may be formed from other suitable materials. Optical waveguides 102 may have a circular cross-sectional shape, a square cross-sectional shape, a rectangular cross-sectional shape, an oval cross-sectional shape, a shape with curved edges, a shape with straight edges, a shape with a combination of curved and straight edges, or other suitable cross-sectional shapes. If desired, optical waveguides 102 may be mounted to a support structure such as support structure 112 (e.g., a rigid or flexible glass or plastic substrate or a layer of resin) or may be mounted directly within housing structures 12 or other support structures.

FIG. 15 is a top view of illustrative backlight structures 30 showing how light guide structure 96 may be provided with light leakage promotion structures such as light leakage promotion structures 104 to help scatter light out of light guide structure 96 and into light guide plate 32. For example, light leakage promotion structures 104 may be formed by roughening or forming notches in the surface of light guide structure 96 that is adjacent to light guide plate 32 (e.g., surface 114). As light propagates within light guide structure 96, the roughened texture of surface 114 may promote light leakage from light guide structure 96 into light guide plate 32.

If desired, an optional reflector such as reflector 106 may be formed adjacent to light guide structure 96 on the opposite side of roughened surface 114. Any light that escapes from light guide structure 96 in direction 108 may be reflected back towards light guide plate 32 by reflector 106. Reflector 106 may be formed from a sheet of white plastic, metal, or other reflective material.

As light 72 propagates within light guide structure 96 (e.g., in direction 116) and the distance from centralized light source 38' increases, the intensity of light 72 may decrease. To ensure that light 72 is evenly distributed along the edge of light guide plate 32, it may be desirable to have increased light leakage from portions of light guide structure 96 that receive light of lower intensity.

To increase light leakage in portions of light guide structure 96 that are farther from centralized light source 38', light leakage promotion structures 104 may be non-uniform along the length of surface 114. For example, the size, density, and/or shape of light leakage promotion structures 104 on surface 114 of light guide structure 96 may change as the distance from centralized light source 38' increases (e.g., the degree of roughness on surface 114 may increase along direction 116). This type of configuration may ensure that light is uniformly distributed along the edge of light guide plate 32.

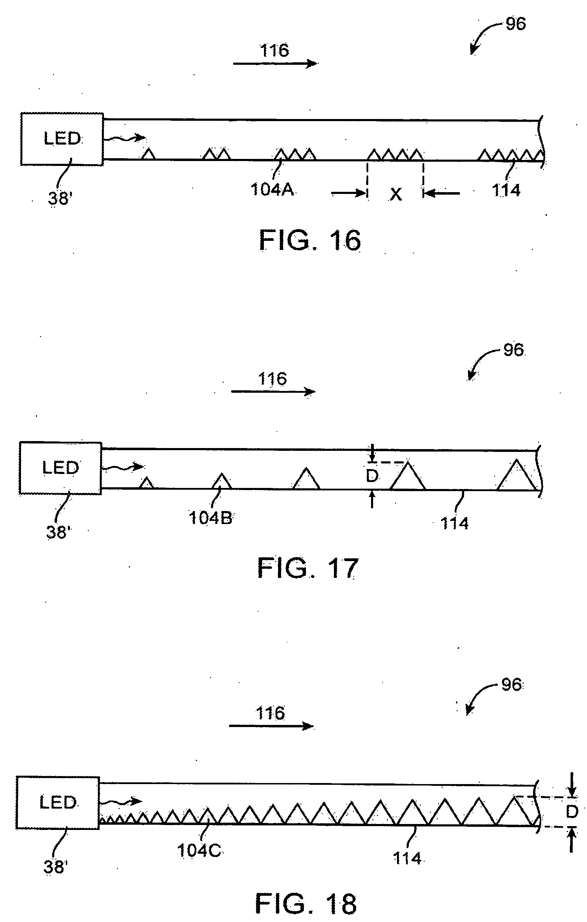

FIGS. 16-20 are illustrative examples of ways in which light guide structure 96 may be provided with non-uniform light leakage promotion structures.

As shown in FIG. 16, light leakage promotion features 104A may include a series of notches or roughened portions formed on surface 114 of light guide structure 96. Each notch or roughened portion 104A may have a width such as width X. The width X of roughened portions 104A may increase along direction 116. If desired, the density of light leakage promotion structures 104A may also increase along the length of light guide structure 96 (e.g., the amount of light leakage promotion structures 104A in a given area of surface 114 may increase along direction 116). Wider roughened portions and/or greater densities of light leakage promotion structures may promote increased light leakage in portions of light guide structure 96 that are farther away from centralized light source 38'.

FIG. 17 is another example of how light leakage promotion structures 104 may be non-uniform along the length of light guide structure 96. In the example of FIG. 17, light leakage promotion structures 104B may vary in size along the length of light guide structure 96. For example, each roughened portion or notch 104B may have a depth such as depth D. The depth D of notches 104B may increase along direction 116. Deeper roughened portions (e.g., light leakage promotion structures of greater size) may promote increased light leakage in portions of light guide structure 96 that are farther away from centralized light source 38'.

FIG. 18 is another example of how light leakage promotion structures may be non-uniform along the length of light guide structure 96. As shown in FIG. 18, light leakage promotion structures 104C may be formed continuously along surface 114 of light guide structure 96. Light leakage promotion structures 104C may have one or more properties that change smoothly along the length of light guide structure 96 (e.g., light leakage promotion structures 104C may be formed from structure types that vary following a linear or curved gradient). For example, depth D of notches 104C may increase gradually along direction 116. Other properties of light leakage promotion structures 104C that may vary gradually along the length of light guide structure 96 include size, shape, density, and/or material properties. Light leakage promotion structures 104C may be used to increase light leakage in portions of light guide structure 96 that are farther away from centralized light source 38'.

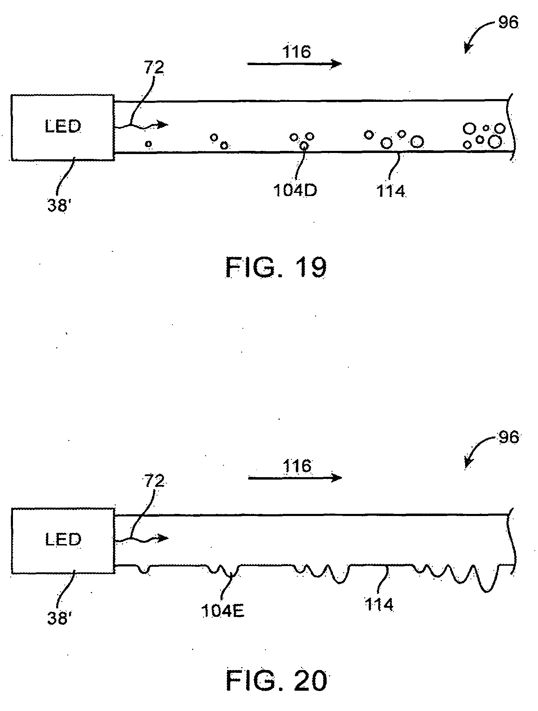

If desired, light leakage promotion structures 104 in light guide structure 96 may be formed from embedded scattering structures such as particles, bubbles, and/or voids. As shown in the illustrative arrangement of FIG. 19, light leakage promotion structures 104D may be formed from bubbles filled with air, particles formed from materials with an index of refraction that is greater than or less than the index of refraction of light guide structure 96, or particles or voids with other properties that scatter light 72 from light source 38' into light guide plate 32 (FIG. 15). Light leakage promotion structures 104D may vary in size, shape, density, and/or material properties (e.g., index-of-refraction) along direction 116 to ensure that light is evenly distributed across surface 114 into light guide plate 32.

If desired, light leakage promotion structures 104 in light guide structure 96 may be formed from other structures such as protrusions. As shown in FIG. 20, a series of protrusions such as protrusions 104E may be formed on surface 114 of light guide structure 96 and may be used to scatter light 72 from light source 38' into light guide plate 32. Protrusions 104E may be formed as integral portions of light guide structure 96 or may be separate structures that are formed on surface 114 of light guide structure 96. Protrusions 104E may vary in size, shape, density, and/or material properties along direction 116 to ensure that light is evenly distributed across surface 114 into light guide plate 32.

An illustrative electronic device of the type that may be provided with a backlit display in which a plurality of light sources are located along the edge of a light guide plate is shown in FIG. 21. Electronic device 10 may be a computer such as a computer that is integrated into a display such as a computer monitor, a laptop computer, a tablet computer, a somewhat smaller portable device such as a wrist-watch device, pendant device, or other wearable or miniature device, a cellular telephone, a media player, a tablet computer, a gaming device, a navigation device, a computer monitor, a television, or other electronic equipment.

As shown in FIG. 21, device 10 may include a backlit display such as display 214. Display 214 may be a touch screen that incorporates capacitive touch electrodes or other touch sensor components or may be a display that is not touch-sensitive. Display 214 may include image pixels formed from liquid crystal display (LCD) components or other suitable display pixel structures. Arrangements in which display 214 is formed using liquid crystal display pixels are sometimes described herein as an example. This is, however, merely illustrative. Any suitable type of display technology may be used in forming display 214 if desired.

Device 10 may have a housing such as housing 212. Housing 212, which may sometimes be referred to as a case, may be formed of plastic, glass, ceramics, fiber composites, metal (e.g., stainless steel, aluminum, etc.), other suitable materials, or a combination of any two or more of these materials.

Housing 212 may be formed using a unibody configuration in which some or all of housing 212 is machined or molded as a single structure or may be formed using multiple structures (e.g., an internal frame structure, one or more structures that form exterior housing surfaces, etc.).

As shown in FIG. 21, housing 212 may have multiple parts. For example, housing 212 may have upper portion 212A and lower portion 212B. Upper portion 212A may be coupled to lower portion 212B using a hinge that allows portion 212A to rotate about rotational axis 216 relative to portion 212B. A keyboard such as keyboard 218 and a touch pad such as touch pad 220 may be mounted in housing portion 212B.

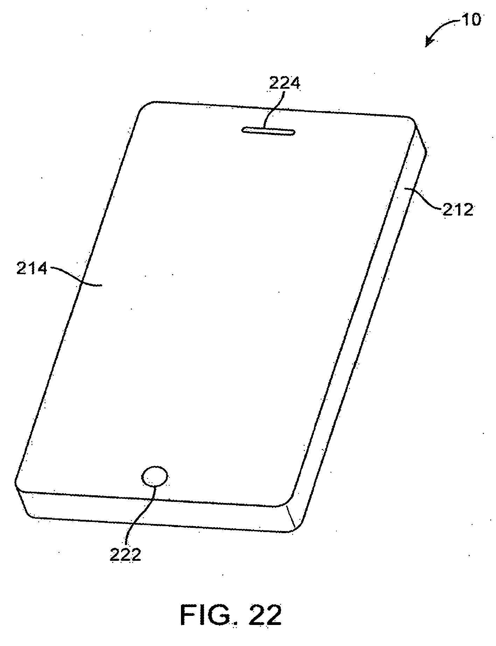

In the example of FIG. 22, device 10 has been implemented using a housing that is sufficiently small to fit within a user's hand (i.e., device 10 of FIG. 22 may be a handheld electronic device such as a cellular telephone). As show in FIG. 22, device 10 may include a backlit display such as display 214 mounted on the front of housing 212. Display 214 may be substantially filled with active display pixels or may have an inactive portion and an inactive portion. Display 214 may have openings (e.g.., openings in the inactive or active portions of display 214) such as an opening to accommodate button 222 and an opening to accommodate speaker port 224.

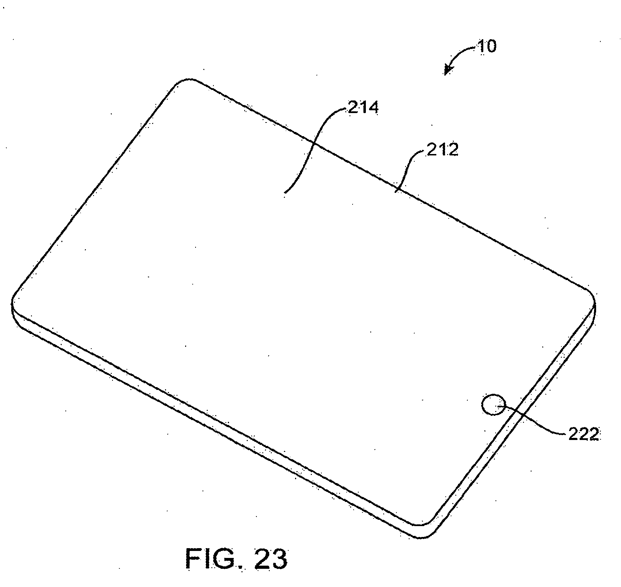

FIG. 23 is a perspective view of electronic device 10 in a configuration in which electronic device 10 has been implemented in the form of a tablet computer. As shown in FIG. 23, backlit display 214 may be mounted on the upper (front) surface of housing 212. An opening may be formed in display 214 to accommodate button 222.

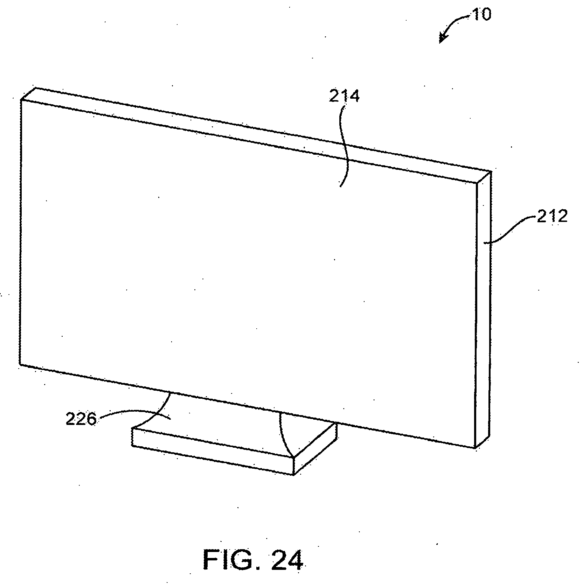

FIG. 24 is a perspective view of electronic device 10 in a configuration in which electronic device 10 has been implemented in the form of a computer integrated into a computer monitor. As shown in. FIG. 24, backlit display 214 may be mounted on the front surface of housing 212. Strand 226 may be used to support housing 212.

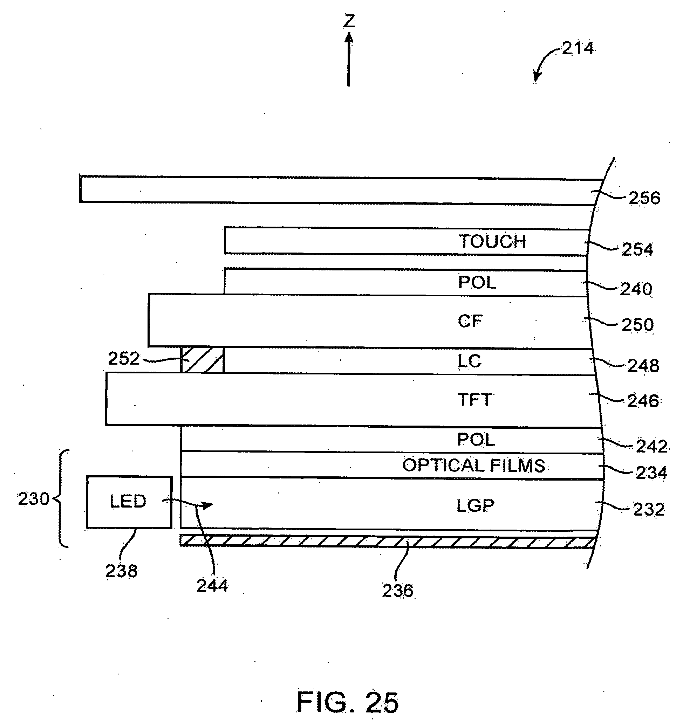

A cross-sectional side view of display 214 is shown in FIG. 25. As shown in FIG. 25, display 214 may include backlight structures 230. Backlight structures 230 may include a light source such as light-emitting diode light source 238, a light guide plate such as light guide plate 232, optical films 234, and a reflector such as reflector 236. During operation, light-emitting diode light source 238 may emit light 244 into light guide plate 232. Light guide plate 232 may be formed from a rectangular sheet of clear plastic. Light 244 may travel within light guide plate 232 by means of total internal reflection. Light that escapes through the upper surface of light guide plate 232 may pass through overlying display layers in direction z and may serve as backlight for display 214. Light that escapes through the lower surface of light guide plate 232 may be reflected by reflector 236 and redirected upwards in direction z. Reflector 236 may be formed from a reflective material such as white plastic (as an example). Optical films 234 may include brightness enhancing film layers, diffusing film layers, and compensating film layers (as examples).

Display 214 may have an upper polarizer layer such as polarizer layer 240 and a lower polarizer layer such as polarizer layer 242. Polarizer layer 242 may polarize backlight 244. Thin-film transistor (TFT) layer 246 may include a layer of thin-film transistor circuitry and an array of associated pixel electrodes. Pixel structures such as thin-film transistor structures and associated pixel electrodes in the array of pixel electrodes on thin-film transistor layer 246 may produce electric fields corresponding to image data to be displayed. The electric field produced by each electrode on thin-film transistor layer 246 adjusts the orientation of liquid crystals in an associated portion of liquid crystal layer 248 by a corresponding amount. As light travels through display 214, the adjustment of the orientation of the liquid crystals adjusts the polarization of the light that passes through layer 248. When this light reaches upper polarizer 240, the polarization state of each pixel of light is attenuated by an amount that is proportional to its polarization, thereby creating visible images for a user.

Color filter layer 250 may contain an array of colored pixels (e.g., an array of red, blue, and green color filter elements) for providing display 214 with the ability to form color images. Sealant 252 may be used to seal color filter layer 250 to thin-film transistor layer 246 and to retain liquid crystal material 248 within display 214.

Display 214 may include a touch-sensitive layer such as touch-sensitive layer 254 for receiving touch input from a user of device 10. Touch-sensitive layer 254 may include a pattern of indium tin oxide (ITO) electrodes or other suitable transparent electrodes that have been deposited to form a capacitive touch sensor array. Touch-sensitive layer 254 may, in general, be configured to detect the location of one or more touches or near touches on touch-sensitive layer 254 based on capacitive, resistive, optical, acoustic, inductive, or mechanical measurements, or any phenomena that can be measured with respect to the occurrence of the one or more touches or near touches in proximity to touch-sensitive layer 254. If desired, touch-sensitive layer 254 may be incorporated into thin-film transistor layer 246 (e.g., display pixel electrodes and capacitive touch electrodes may be formed on a common substrate). The example of FIG. 25 in which touch-sensitive layer 254 is separate from thin-film transistor layer 246 is merely illustrative.

If desired, additional layers may be included in display 214. An optional layer of transparent glass or plastic may be used to provide a protective cover for display 214, as illustrated by cover layer 256 of FIG. 25.

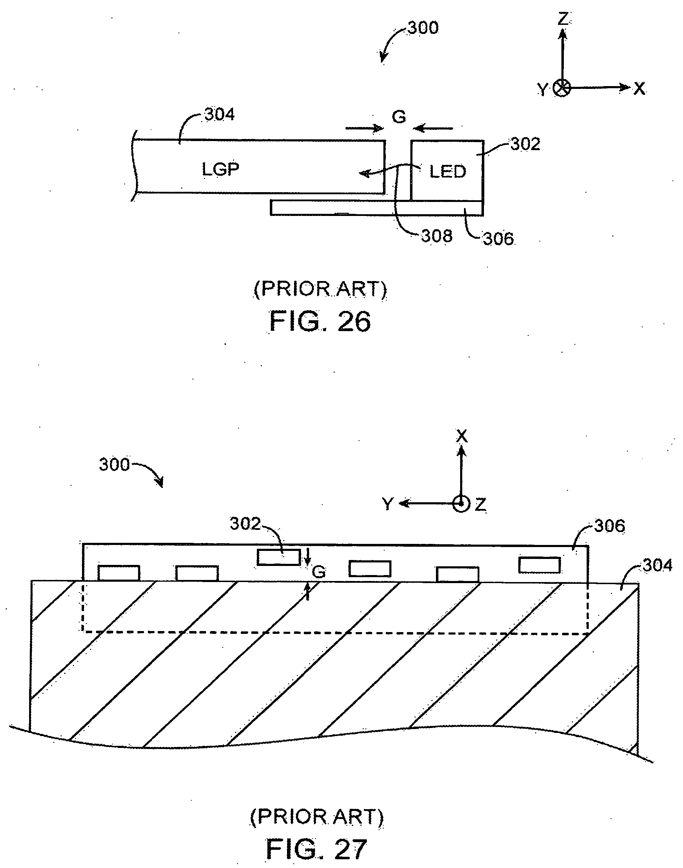

A cross-sectional side view of a conventional backlight arrangement is shown in FIG. 26. As shown in FIG. 26, backlight illumination is provided by a strip of light-emitting diodes 302 located along the edge of light guide plate 304. Light-emitting diodes 302 are mounted to flexible printed circuit substrate 306, typically using solder. Due to placement variation during the mounting process, light-emitting diodes 302 are often misaligned. As a result, an air gap G forms between light-emitting diodes 302 and the edge of light guide plate 304. Such air gaps G can have an adverse impact on backlight efficiency. For example, light 308 will experience a change in refractive index as it travels from air gap G to light guide plate 304. This in turn will alter the angle at which light 308 enters light guide plate 304, possibly inhibiting the ability of light guide plate 304 to evenly distribute backlight to the entire display.

A top view of a conventional backlight arrangement with air gaps is shown in FIG. 27. As shown in FIG. 27, light-emitting diodes 302 are misaligned, resulting in air gaps G between light-emitting diodes 302 and light guide plate 304. Because light-emitting diodes 302 are mechanically coupled together by the solid strip of flexible printed circuit substrate 306, individual light-emitting diodes 302 are not able to independently register to light guide plate 304. As a result, backlight structures 300 will have low optical efficiency.

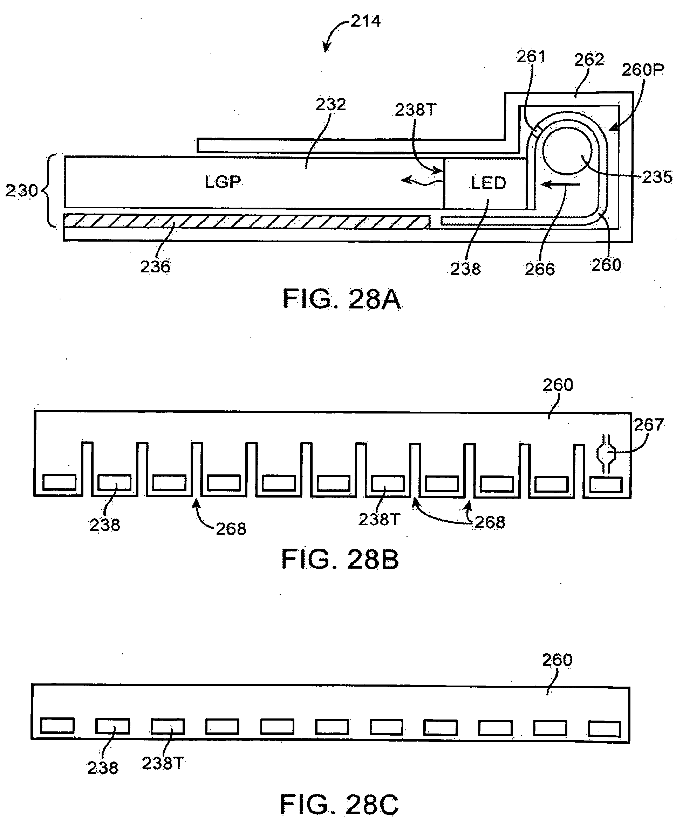

FIG. 28A is a cross-sectional side view of a portion of display 214 illustrating how the optical efficiency of display 214 may be maximized. As shown in FIG. 28A, backlight structures 230 may include light guide plate 232, reflector 236, and a plurality of light-emitting diodes 238. Light-emitting diodes 238 may be mounted on a strip of flexible printed circuit (sometimes referred to as a "flex circuit" or "flex tail") such as flex circuit 260. Flex circuit 260 and other flexible printed circuits in device 10 may be formed from sheets of polyimide and/or other layers of polymer. Flex circuit 260 may include patterned metal traces to which packaged light-emitting diodes 238 are soldered. Patterned metal traces on flex circuit 260 may be used to distribute power to conductive terminals of light-emitting diodes 238. The strip of flex circuit 260 on which the plurality of light-emitting diodes 238 is mounted is sometimes referred to as a "light strip" or a "light bar."

Backlight structures 230 may be mounted within an optional support structure such as support structure 262. Support structure 262 (sometimes referred to as a chassis or mechanical chassis) may be formed from materials such as plastic, ceramic, fiber composites, metal, or other suitable materials. If desired, display 214 may be formed by mounting backlight structures 230 directly within housing 212 or by mounting backlight structures 230 in support structures of other shapes. In the illustrative configuration of FIG. 28A, mechanical chassis 262 is used in forming a backlight assembly for display 214 that may be mounted within housing 212 under a display cover layer such as display cover layer 256 of FIG. 25. Other mounting configurations may be used, if desired.

As shown in FIG. 28A, light-emitting diodes 238 may be interposed between flex tail 260 and light guide plate 232. Each light-emitting diode 238 may have a base surface that is mounted (e.g., soldered) to flex tail 260 and a top surface 238T opposing the base surface that emits light into light guide plate 232. To ensure that light-emitting diodes 238 press against light guide plate 232, flex tail 260 may be curled and/or bent to form a spring element such as spring element 260P. Spring element 260P may exert a force on light-emitting diodes 238 in direction 266 (e.g., towards light guide plate 232). To form flex tail 260 into this type of spring element, flex tail 260 may be curled inside of support structure 262. In an attempt to return to its equilibrium position (e.g., uncurled), flex tail 260 will naturally exert a force in direction 266, thereby pressing top surface 238T of light-emitting diodes 238 against light guide plate 232. Light may be emitted from top surface 238T of light-emitting diode 238 directly into the edge of light guide plate 232. Forming flex tail 260 into a spring element that biases light-emitting diodes 238 against light guide plate 232 may help reduce or eliminate air gaps between light-emitting diodes 238 and light guide plate 232.

If desired, a bend-guiding structure such as bend-guiding structure 235 may optionally be used to form and shape flex tail 260 into spring element 260P. Flex tail 260 may be bent around bend-guiding structure 235 to form the desired bend in flex tail 260. Bend-guiding structure 235 (sometimes referred to as a mandrel) may be a compliant or undersized structure and may be formed from materials such as foam, rubber, plastic, or other suitable materials. For example, bend-guiding structure 235 may have an elongated rod shape that runs parallel to an edge of electronic device 10. A curved surface on bend-guiding structure 235 may be used in forming a bent portion on flex tail 260 as flex tail 260 curls around bend-guiding structure 235. If desired, bend-guiding structure 235 may be heated while manipulating flex tail 260 into spring element 260P. Bend-guiding structure 235 may be formed as an integral part of housing 212, may be formed as an integral part of support structure 262, or may be a separate structure used to form flex tail 260 into spring element 260P.

Some areas such as bend region 261 of spring element 260P may have a smaller bend radius than other areas of spring element 260P. Measures may be taken to minimize the stress on flex tail 260 in regions such as region 261. For example, region 261 of flex tail 260 may be provided with perforations, may be preformed (e.g., using a heated forming process or a cold forming process), may have reduced layers (e.g., copper plating in the bend region of flex circuit 260 may be reduced to one layer to increase flexibility in the bend region), etc. Patterned traces may be strengthened in portions of flex tail 260 that have a small bend radius by increasing the width of the traces in the bend region.

Light-emitting diodes 238 may be mechanically decoupled from one another so that each individual light-emitting diode 238 may independently register to light guide plate 232. To decouple light-emitting diodes 238, gaps may be formed in flex tail 260 to separate adjacent light-emitting diodes 238. A top view of flex tail 260 in which gaps are used to separate adjacent light-emitting diodes 238 is shown in FIG. 28B. If desired, flex tail 260 of FIG. 28B may be used to form the spring element of FIG. 28A.

As shown in FIG. 28B, a plurality of gaps such as gaps 268 may be formed in flex tail 260, thereby creating a plurality of separated flexible "tabs." Each light-emitting diode 238 may be mounted on an associated flexible tab. Gaps 268 (sometimes referred to as slots) may separate and mechanically decouple light-emitting diodes 238 from one another, allowing each to independently register to light guide plate 232. If desired, traces such as trace 267 may be locally widened in the bent portions of flex tail 260 to enhance the strength of the traces in the bent portions.

In FIG. 28B, flex tail 260 is shown in a flat position (e.g., "uncurled"). When flex tail 260 is curled into the shape of spring element 260P shown in FIG. 28A, top surface 238T of each light-emitting diode 238 will be pressed against the edge of light guide plate 232. The force provided by spring element 260P may push top surfaces 238T of light-emitting diodes 238 up against light guide plate 232, and each individual light-emitting diode 238 may independently register to light guide plate 232.

In the example of FIG. 28B, gaps 268 are used to isolate each individual light-emitting diode 238 (e.g., a single light-emitting diode 238 is mounted on each flexible tab). This is, however, merely illustrative. If desired, gaps 268 may be used to isolate groups of light-emitting diodes 238. For example, there may be two, three, or more than three light-emitting diodes on an associated flexible tab, if desired. In general, any number of gaps 268 may be used to separate any number of light-emitting diodes 238.

FIG. 28C is a top view of another possible configuration of flex tail 260 that may be used to form spring element 260P of FIG. 28A. As shown in FIG. 28C, flex tail 260 on which light-emitting diodes 238 are mounted may be a solid strip of flexible printed circuit substrate. In FIG. 28C, flex tail 260 is shown in a flat position (e.g., "uncurled"). When flex tail 260 is curled into the shape of spring element 260P shown in FIG. 28A, the force provided by spring element 260P will push top surface 238T of each light-emitting diode 238 up against light guide plate 232. Light may be emitted from top surface 238T of light-emitting diodes 238 directly into the edge of light guide plate 232.

Since top surface 238T of each light-emitting diode 238 registers to light guide plate 232, any placement variation in light-emitting diodes 238 on flex tail 260 (e.g., variation in location on the surface of flex tail 260) will not affect the light-emitting diodes' ability to physically contact light guide plate 232. The force provided by spring element 260P will push top surface 238T in direct contact with light guide plate 232 regardless of any lateral misalignment on the surface of flex tail 260.

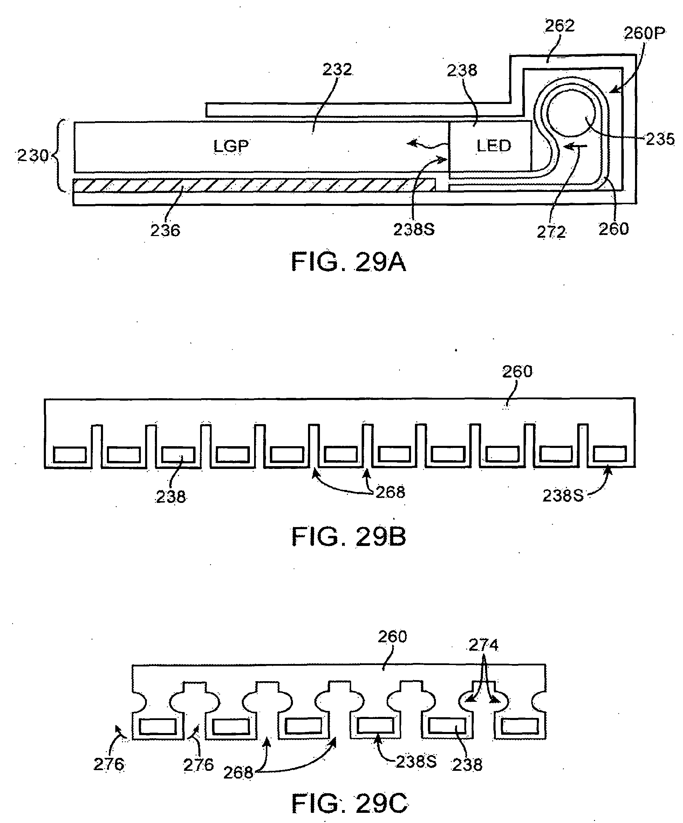

FIG. 29A is a cross-sectional side view of a portion of display 214 illustrating another possible backlight assembly that may be used to optimize the optical efficiency of display 214. As shown in FIG. 29A, flex tail 260 may be curled and/or bent to form spring element 260P. Spring element 260P of FIG. 29A may exert a force on light-emitting diodes 238 in direction 272 (e.g., towards light guide plate 232), thereby pressing side surface 238S of light-emitting diodes 238 against light guide plate 232. Light may be emitted from side surface 238S of each light-emitting diode 238 (e.g., a surface that is perpendicular to the base surface of light-emitting diode 238) directly into the edge of light guide plate 232.

If desired, bend-guiding structure 235 may optionally be used to form and shape flex tail 260 into spring element 260P. Flex tail 260 may be wrapped around bend-guiding structure 235 to form the desired bend in flex tail 260. To minimize the stress on flex tail 260 in areas of small bend radius, portions of flex tail 260 may be perforated, may be preformed (e.g., using a heated forming process or a cold forming process), may have reduced layers (e.g., copper plating in bend regions of flex circuit 260 may be reduced to one layer to increase flexibility in the bend region), etc. Patterned traces may be strengthened in portions of flex tail 260 that have a small bend radius by increasing the width of the traces in the bend region.

If desired, light-emitting diodes 238 may be mechanically decoupled from one another so that each individual light-emitting diode 238 may independently register to light guide plate 232. A top view of flex tail 260 in which gaps are used to separate adjacent light-emitting diodes 238 is shown in FIG. 29B. If desired, flex tail 260 of FIG. 29B may be used to form the spring element of FIG. 29A.

As shown in FIG. 29B, a plurality of gaps 268 (e.g., rectangular slots) may be formed in flex tail 260, thereby creating a plurality of separated flexible tabs. Each light-emitting diode 238 may be mounted on an associated flexible tab. Gaps 268 may separate and mechanically decouple light-emitting diodes 238 from one another, allowing each to independently register to light guide plate 232.

In FIG. 29B, flex tail 260 is shown in a flat position (e.g., "uncurled"). When flex tail 260 is curled into the shape of spring element 260P shown in FIG. 29A, side surface 238S of light-emitting diode 238 may be in direct contact with light guide plate 232. The force provided by spring element 260P may push side surface 238S of each light-emitting diode 238 against light guide plate 232. Because light-emitting diodes 238 are mechanically decoupled from one another, misalignment in light-emitting diodes 238 will not affect the ability of individual light-emitting diodes 238 to physically contact the edge of light guide plate 232.

During manufacturing, a light-emitting diode may be unintentionally soldered to a flex tail at a slight angle. If care is not taken, this type of angled position may lead to an air gap between the light-emitting diode and the light guide plate. To ensure that light-emitting diodes 238 are flush with the edge of light guide plate 232, light-emitting diodes 238 may be provided with rotational capabilities. FIG. 29C is a top view of flex tail 260 in which light-emitting diodes 238 are provided with rotational capabilities. If desired, flex tail 260 of FIG. 29C may be used to form spring element 260P of FIG. 29A.

As shown in FIG. 29C, a plurality of slots 268 may be interposed between adjacent light-emitting diodes 238. Slots 268 may have locally widened portions such as widened portions 274. Having slots with locally widened portions may allow each light-emitting diode 238 to rotate slightly, as indicated by arrows 276 in FIG. 29C. Providing light-emitting diodes 238 with rotational capabilities may ensure that the entire side surface 238S of each light-emitting diode 238 is in direct contact with light guide plate 232.

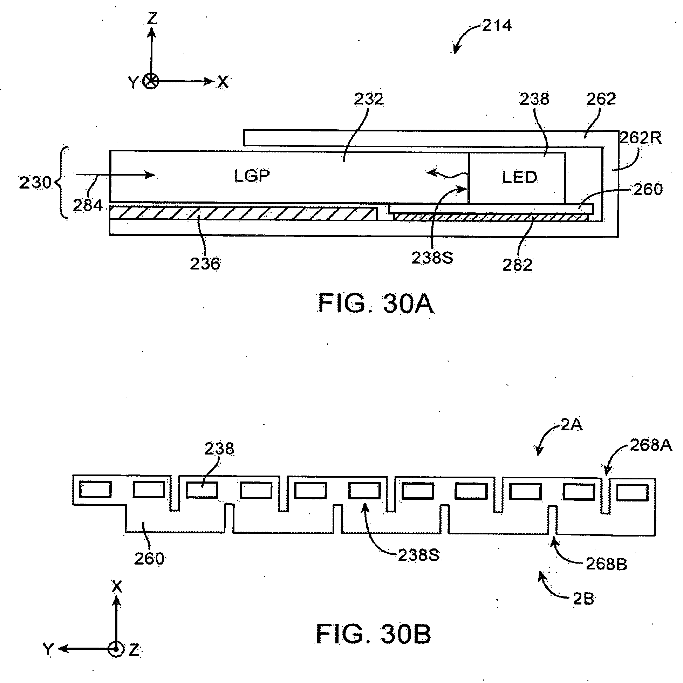

FIG. 30A is a cross-sectional side view of a portion of display 214 illustrating another possible backlight arrangement that may optimize the optical efficiency of display 214. As shown in FIG. 30A, flex tail 260 may lie flat along the edge of light guide plate 232.

A layer of adhesive such as adhesive 282 may be interposed between flex tail 260 and support structure 262. Adhesive 282 may be a high shear adhesive that attaches flex tail 260 to support structure 262 while allowing some movement of flex tail 260 along the surface of support structure 262. A high shear adhesive such as adhesive 282 may provide a means of securing flex tail 260 to the interior of support structure 262 without constricting its lateral movement on the surface of support structure 262 (e.g., without inhibiting registration between light guide plate 232 and light-emitting diodes 238). Adhesive 282 may be formed from pressure sensitive adhesive, UV-curable adhesive, air-curable adhesive, moisture-curable adhesive, or other suitable type of adhesive. If desired, adhesive 282 may be used as a heat sink. For example, adhesive 282 may be formed from a material with high thermal conductivity and may be configured to transfer heat from backlight structures 230 to support structure 262, housing 212, or other suitable heat spreader in the vicinity of backlight structures 30.

The plurality of light-emitting diodes 238 that are mounted on flex tail 260 may be mechanically decoupled from one another so that each individual light-emitting diode 238 may independently register to light guide plate 232. A top view of a flex tail of the type that may be used in the configuration of FIG. 30A is shown in FIG. 30B.

As shown in FIG. 30B, flex tail 260 may have a serpentine shape in which gaps are formed on both sides of flex tail 260. For example, a gap such as gap 268A may be formed on side 2A of flex tail 260, between adjacent light-emitting diodes 238. The next closest gap such as gap 268B may be formed on side 2B of flex tail 260 (e.g., the opposite side of flex tail 260). The gaps may alternate sides along the length of flex tail 260 to create a serpentine-shaped flexible substrate.

When backlight structures 230 are inserted into support structure 262A, a force may be applied in direction 284 (FIG. 30A). This may push flex tail 260 into rear wall 262R of support structure 262 and reduce or eliminate gaps between light-emitting diodes 238 and light guide plate 232. Due to the serpentine-shape of flex tail 260 (FIG. 30B), light-emitting diodes 238 may be mechanically decoupled from one another so that side surface 238S of each light-emitting diode 238 may independently register to light guide plate 232.

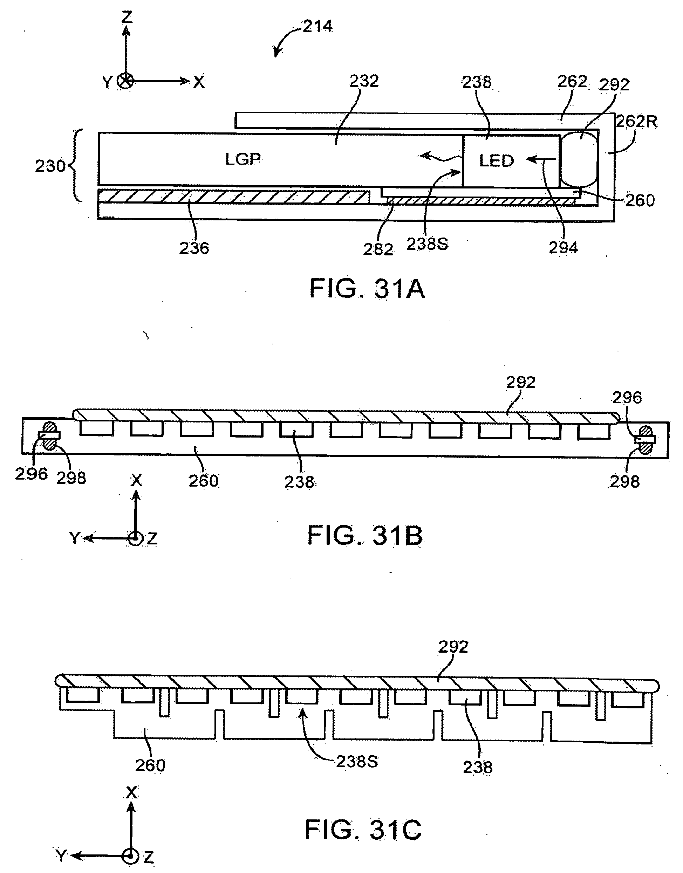

FIG. 31A is a cross-sectional side view of a portion of display 214 illustrating another possible backlight assembly that may be used to optimize the optical efficiency of display 214. As shown in FIG. 31A, flex tail 260 may lie flat along the edge of light guide plate 232. A biasing structure such as biasing structure 292 may be used to bias light-emitting diodes 238 against light guide plate 232 to help reduce or eliminate air gaps between light-emitting diodes 238 and light guide plate 232. Biasing structure 292 may be interposed between light-emitting diodes 238 and rear wall 262R of support structure 262.

If desired, biasing structure 292 may be formed from a conformable, thermally conductive foam (e.g., a foam formed from Gap Pad^{®} material or other suitable material). Using a thermally conductive material to form biasing structure 292 may allow biasing structure 292 to transfer heat from backlight structures 230 (e.g., from light-emitting diodes 238) to support structure 262, housing 212, or other suitable heat spreader in the vicinity of backlight structures 30. Other structures that may be used to bias light-emitting diodes 238 against light guide plate 232 include metal-filled foam, a V-shaped structure (e.g., a V-shaped metal spring member), a spring structure, other suitable structures, etc.

If desired, an optional adhesive such as high shear adhesive 282 may be used to attach flex tail 260 to support structure 262 without constricting its lateral movement on the surface of support structure 262 (e.g., without resisting the biasing force provided by biasing structure 292). This is, however, merely illustrative. Other methods may be used to attach flex circuit 260 to support structure 262. For example, opposing ends of flex tail 260 may be provided with rail holes. Screws or pins may be used to secure flex tail 260 to support structure 262 at the rail holes. FIG. 31B is a top view of flex tail 260 illustrating how rail holes may be used to attach flex tail 260 to support structure 262.

As shown in FIG. 31B, holes such as rail holes 980 (sometimes referred to as openings or slots) may be formed in opposing ends of flex tail 260. A pin such as pin 960 may be inserted through each rail hole 980. Pins 960 may be used to fasten flex tail 260 to support structure 262. Pins 960 may be mushroom pins, straight pins, or any other suitable type of pin or screw. Rail holes 980 may have an elongated "rail" shape. Movement of flex tail 260 in the y and z-directions may be restricted, whereas movement in the x-direction may be permitted (e.g., movement along the length of elongated rail holes 980 may be permitted). This type of fastening method may provide a means of securing flex tail 260 to the interior of support structure 262 without constricting its lateral movement relative to light guide plate 232 (e.g., without resisting the biasing force provided by biasing structure 292).

When backlight structures 230 are inserted into support structure 262, biasing structure 292 may exert a force in direction 294 (e.g., biasing structure 292 may bias light-emitting diodes 238 against light guide plate 232). The biasing force provided by biasing structure 292 may reduce or eliminate gaps between light-emitting diodes 238 and light guide plate 232. If desired, flex tail 260 may be formed with a serpentine-shape as shown in FIG. 31C. The serpentine-shape of flex tail 260 may be used to mechanically decouple light-emitting diodes 238 from one another so that side surface 238S of each light-emitting diode 238 may independently register to light guide plate 232.

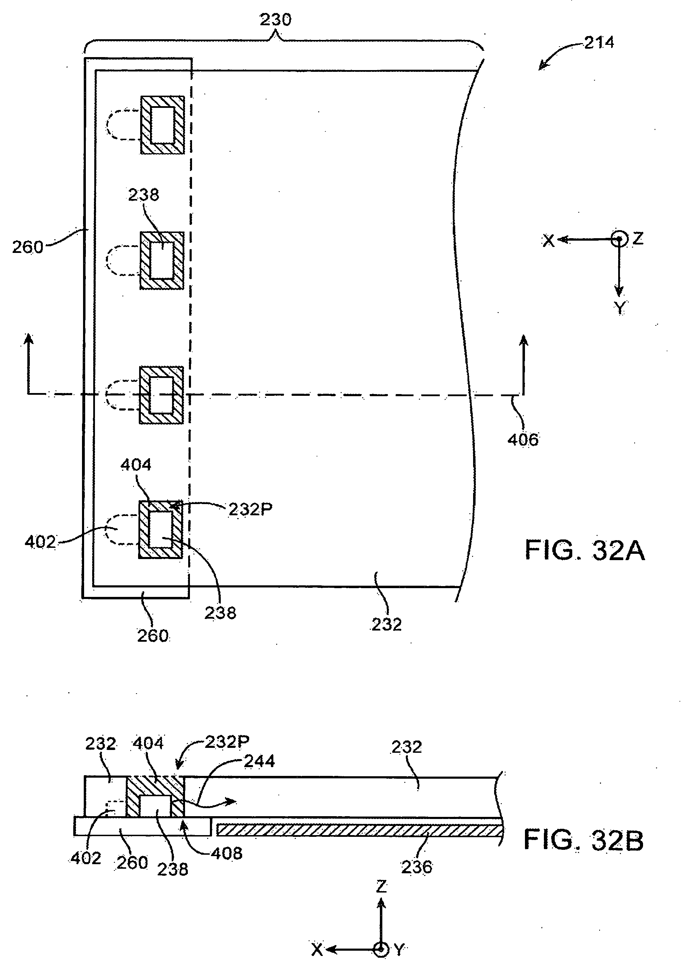

FIG. 32A is a top view of a portion of display 214 illustrating another possible backlight assembly that may be used to optimize the optical efficiency of display 214. As shown in FIG. 32A, light guide plate 232 may have a row of holes 232P that extends parallel to one of the edges of light guide plate 232. Each hole 232P (sometimes referred to as an opening or light guide plate opening) may be enclosed and surrounded by light guide plate material.

Backlight structures 230 may include a row of light-emitting diodes 238 mounted on flex tail 260. An edge of light guide plate 232 may overlap flex tail 260 such that the row of light-emitting diodes 238 aligns with the row of light guide plate openings 232P. Light-emitting diodes 238 may each be positioned within an associated hole 232P. Holes 232P may have any suitable shape that accommodates light-emitting diodes 238 when light-emitting diodes 238 are inserted into light guide plate openings 232P. If desired, more than one light-emitting diode 238 may be mounted into an associated light guide plate opening 232P. The example of FIG. 32A in which a single light-emitting diode 238 is mounted in each opening 232P is merely illustrative.

To eliminate air gaps between light-emitting diodes 238 and light guide plate 232, an index-matching material such as index-of-refraction-matching material 404 may be used to fill holes 232P around each light-emitting diode 238. The refractive index of index-matching material 404 may be matched to the refractive index of light guide plate 232. In this type of configuration, the angle at which light from light-emitting diode 238 enters light guide plate 232 will not be effected by a change in refractive index as it passes from index-matching material 404 to light guide plate 232. Index-matching material 404 may be optically clear and may be formed from UV-curable adhesive, air-curable adhesive, moisture-curable adhesive, gel, or other suitable materials.

If desired, an optional reservoir such as reservoir 402 may be formed in light guide plate 232 adjacent to an associated opening 232P. Reservoir 402 may be formed as an extension to opening 232P (e.g., a recess or cavity adjacent to opening 232P). Reservoir 402 may be configured to receive excess index-matching material 404 in opening 232P. Reservoir 402 may be formed on a side of light-emitting diode 238 that does not emit light (e.g., a rear side of light-emitting diode 238 as shown in FIG. 32A). If desired, light guide plate openings 232P may not be provided with reservoirs 402. The example of FIG. 32A in which light guide plate openings 232P are provided with reservoirs 402 for receiving excess index-matching material 404 is merely illustrative.

A cross-section of backlight structures 230 taken along axis 406 is shown in FIG. 32B. As shown in FIG. 32B, light 244 may be emitted from light-emitting diode 238 and may travel through index-matching material 404 and into light guide,plate 232. Index-matching material 404 may ensure that the angle at which light enters light guide plate 232 is not affected by a change refractive index at interface 408. Light 244 may travel within light guide plate 232 by means of total internal reflection. Light that escapes through the upper surface of light guide plate 232 may pass through overlying display layers in direction z and may serve as backlight for display 214. Light that escapes through the lower surface of light guide plate 232 may be reflected by reflector 236 and redirected upwards in direction z.

If desired, light may be launched into light guide plate 232 from more than one edge of plate 232. For example, a strip of light-emitting diodes 238 may be placed along one edge, two edges, three edges, or all four edges of light guide plate 232. The example of FIG. 32A in which light-emitting diodes 238 are located along one edge of light guide plate 232 is merely illustrative.

## Claims

1. An electronic device (10), comprising:
a housing (12) having a rear surface;
a display (14) mounted in the housing (12);
a button (22) adjacent the display (14); and
a backlight assembly (30) configured to provide backlight illumination for the display (14), wherein the backlight assembly (30) includes:
a light guide plate (32) having a surface from which the backlight illumination is provided to the display (14) and having an edge into which light (72) is launched to form the backlight illumination,
a light guide structure (74) coupled to the edge of the light guide plate (32), and
a plurality of light sources (38) coupled to the light guide structure (74), wherein the light guide structure (74) is configured to guide the light (72) from the light sources (38) to the edge of the light guide plate (32) via total internal reflection, wherein the light guide structure (74) comprises opposing upper and lower curved surfaces that curve away from the button (22) to accommodate the button (22), and wherein at least one of the light sources (38) is interposed between the button (22) and the rear surface of the housing (12).

2. The electronic device (10) defined in claim 1 wherein the light guide plate (32) is integral with the light guide structure (74).

3. The electronic device (10) defined in claim 2 wherein the plurality of light sources (38) comprises a plurality of light-emitting diodes.

4. The electronic device (10) defined in claim 1 wherein the light guide structure (74) comprises a transparent polymer.

5. The electronic device (10) defined in claim 1 wherein the button (22) and the light guide structure (74) are separated by a gap.

6. The electronic device (10) defined in claim 1 further comprising:
a chassis (76) in which the plurality of light sources (38) are mounted.

7. The electronic device (10) defined in claim 6 wherein the chassis (76) comprises a metal chassis.

8. The electronic device (10) defined in claim 6 wherein the chassis (76) comprises thermally conductive material that conducts heat away from the plurality of light sources (38).

9. The electronic device (10) defined in claim 6 wherein the light guide plate (32) lies in a plane and wherein the at least one light source (38) is located outside of the plane.

10. The electronic device (10) defined in claim 1 wherein the display (14) includes an active area (AA) surrounded by an inactive area (IA) and wherein the button (22) is located in the inactive area (IA).

11. The electronic device (10) defined in claim 10. wherein the at least one light source (38) is located directly below the button (22) in the inactive area (IA).

## Patentansprüche

1. Eine elektronische Vorrichtung (10) umfassend:
ein Gehäuse (12) mit einer hinteren Fläche;
eine Anzeige (14) montiert in dem Gehäuse (12);
eine Schaltfläche (22) neben der Anzeige (14); und
einen Hintergrundbeleuchtungsaufbau (30) konfiguriert, um Hintergrundbeleuchtung für die Anzeige (14) bereitzustellen, wobei der Hintergrundbeleuchtungsaufbau (30) umfasst:
eine Lichtführungsplatte (32) mit einer Oberfläche, von der die Hintergrundbeleuchtung an die Anzeige (14) bereitgestellt wird und einen Rand hat, in den Licht (72) eingeführt ist, um die Hintergrundbeleuchtung zu bilden,
eine Lichtführungsstruktur (74) gekoppelt an den Rand der Lichtführungsplatte (32), und
eine Vielzahl von Lichtquellen (38) gekoppelt an die Lichtführungsstruktur (74), wobei die Lichtführungsstruktur (74) konfiguriert ist, um das Licht (72) von den Lichtquellen (38) an den Rand der Lichtführungsplatte (32) über totale innere Reflexion zu führen, wobei die Lichtführungsstruktur (74) sich gegenüberliegende obere und untere gekurvte Oberflächen umfasst, die sich von der Schaltfläche (22) weg biegen, um die Schaltfläche (22) aufzunehmen, und wobei zumindest eine der Lichtquellen (38) zwischen der Schaltfläche (22) und der hinteren Fläche des Gehäuses (12) zwischengeschaltet ist.

2. Elektronische Vorrichtung (10) nach Anspruch 1, wobei die Lichtführungsplatte (32) mit der Lichtführungsstruktur (74) fest verbunden ist.

3. Elektronische Vorrichtung (10) nach Anspruch 2, wobei die Vielzahl von Lichtquellen (38) eine Vielzahl von lichtemittierenden Dioden umfasst.

4. Elektronische Vorrichtung (10) nach Anspruch 1, wobei die Lichtführungsstruktur (74) ein transparentes Polymer umfasst.

5. Elektronische Vorrichtung (10) nach Anspruch 1, wobei die Schaltfläche (22) und die Lichtführungsstruktur (74) durch einen Spalt getrennt sind.

6. Elektronische Vorrichtung (10) nach Anspruch 1, ferner umfassend:
ein Gehäuse (76), in dem die Vielzahl von Lichtquellen (38) eingebaut ist.

7. Elektronische Vorrichtung (10) nach Anspruch 6, wobei das Gehäuse (76) ein Metallgehäuse umfasst.

8. Elektronische Vorrichtung (10) nach Anspruch 6, wobei das Gehäuse (76) thermisch leitendes Material umfasst, das die Wärme von der Vielzahl von Lichtquellen (38) weg leitet.

9. Elektronische Vorrichtung (10) nach Anspruch 6, wobei die Lichtführungsplatte (32) in einer Ebene liegt und wobei die zumindest eine Lichtquelle (38) außerhalb der Ebene angeordnet ist.

10. Elektronische Vorrichtung (10) nach Anspruch 1, wobei die Anzeige (14) einen aktiven Bereich (AA) umfasst, der von einem inaktiven Bereich (IA) umgeben ist und wobei die Schaltfläche (22) in dem inaktiven Bereich (IA) angeordnet ist.

11. Elektronische Vorrichtung (10) nach Anspruch 10, wobei die zumindest eine Lichtquelle (38) direkt unterhalb der Schaltfläche (22) in dem inaktiven Bereich (IA) angeordnet ist.

## Revendications

1. Dispositif électronique (10), comprenant :
un boîtier (12) ayant une surface arrière ;
un écran (14) monté dans le boîtier (12) ;
un bouton (22) adjacent à l'écran (14) ; et
un ensemble de rétroéclairage (30) configuré pour fournir une illumination de rétroéclairage à l'écran (14), dans lequel l'ensemble de rétroéclairage (30) comprend :
une plaque guide de lumière (32) ayant une surface depuis laquelle l'illumination de rétroéclairage est fournie à l'écran (14) et ayant un bord dans lequel la lumière (72) est émise pour former l'illumination de rétroéclairage,
une structure guide de lumière (74) couplée au bord de la plaque guide de lumière (32), et
une pluralité de sources de lumière (38) couplées à la structure guide de lumière (74), dans lequel la structure guide de lumière (74) est configurée pour guider la lumière (72), des sources de lumière (38) au bord de la plaque guide de lumière (32), par le biais d'une réflexion interne totale, dans lequel la structure guide de lumière (74) comprend des surfaces incurvées supérieure et inférieure opposées qui présentent une courbure s'éloignant du bouton (22) afin de loger le bouton (22), et dans lequel au moins une des sources de lumière (38) est disposée entre le bouton (22) et la surface arrière du boîtier (12).

2. Dispositif électronique (10) selon la revendication 1 dans lequel la plaque guide de lumière (32) fait partie intégrante de la structure guide de lumière (74).

3. Dispositif électronique (10) selon la revendication 2, dans lequel la pluralité de sources de lumière (38) comprend une pluralité de diodes électroluminescentes.

4. Dispositif électronique (10) selon la revendication 1, dans lequel la structure guide de lumière (74) comprend un polymère transparent.

5. Dispositif électronique (10) selon la revendication 1, dans lequel le bouton (22) et la structure guide de lumière (74) sont séparés par un intervalle.

6. Dispositif électronique (10) selon la revendication 1, comprenant en outre :
un châssis (76) dans lequel la pluralité de sources de lumière (38) sont montées.

7. Dispositif électronique (10) selon la revendication 6, dans lequel le châssis (76) comprend un châssis en métal.

8. Dispositif électronique (10) selon la revendication 6, dans lequel le châssis (76) comprend un matériau thermoconducteur qui évacue la chaleur de la pluralité de sources de lumière (38).

9. Dispositif électronique (10) selon la revendication 6, dans lequel la plaque guide de lumière (32) est située dans un plan et dans lequel la au moins une source de lumière (38) est positionnée à l'extérieur du plan.

10. Dispositif électronique (10) selon la revendication 1, dans lequel l'écran (14) comporte une zone active (AA) entourée par une zone inactive (IA) et dans lequel le bouton (22) est positionné dans la zone inactive (IA).

11. Dispositif électronique (10) selon la revendication 10, dans lequel la au moins une source de lumière (38) est positionnée directement sous le bouton (22) dans la zone inactive (IA).
